Europäisches Patentamt

European Patent Office

Office européen des brevets

(19)

(11) **EP 1 549 072 A1**

(12) **EUROPEAN PATENT APPLICATION**
published in accordance with Art. 158(3) EPC

| | |
|---|---|
| (43) Date of publication:<br>**29.06.2005 Bulletin 2005/26** | (51) Int Cl.⁷: $H04N\ 7/18$, $H04N\ 5/91$ |
| (21) Application number: **03792749.8** | (86) International application number:<br>**PCT/JP2003/010531** |
| (22) Date of filing: **20.08.2003** | (87) International publication number:<br>**WO 2004/019617 (04.03.2004 Gazette 2004/10)** |

| | |
|---|---|
| (84) Designated Contracting States:<br>**AT BE BG CH CY CZ DE DK EE ES FI FR GB GR HU IE IT LI LU MC NL PT RO SE SI SK TR**<br>Designated Extension States:<br>**AL LT LV MK** | (71) Applicant: **Olympus Corporation Tokyo 151-0072 (JP)** |
| (30) Priority: **20.08.2002 JP 2002239616**<br>**20.08.2002 JP 2002239617** | (72) Inventor: **MORISHIMA, Masahiro Hachioji-shi, Tokyo 192-0045 (JP)** |
| | (74) Representative: **KUHNEN & WACKER Patent- und Rechtsanwaltsbüro Prinz-Ludwig-Strasse 40A 85354 Freising (DE)** |

(54) **IMAGE COMPARISON DEVICE, IMAGE COMPARISON METHOD, AND PROGRAM CAUSING COMPUTER TO EXECUTE IMAGE COMPARISON**

(57)    An image comparison apparatus comprises observation image take-in means for taking in one of a macro observation image and a micro observation image of a sample, imaging means for photographing the observation image taken in by the observation image take-in means, recording means for recording a reference image prepared beforehand, display means for displaying the observation image photographed by the imaging means as a comparative image, and control means for correcting the reference image in such a manner that a position and a magnification of the reference image recorded in the recording means are the same as those of the comparative image displayed in the display means, and displaying the reference image on the display means in such a manner that the reference image is comparable with the comparative image.

FIG.1

EP 1 549 072 A1

## Description

Technical Field

The present invention relates to an image comparison apparatus for comparing comparative images to be compared/contrasted using a reference image which is a specimen, an image comparison method, and a program to execute image comparison by a computer.

Background Art

In recent years, many cases such as forgery of printed matters, special printing of identification cards or the like, and forgery of processing have occurred, and forgery methods have been skillful, and difficult to recognize. Printing or processing itself for preventing the forgery has been precise such that it is difficult to visually confirm the printing or the processing.

In view of this, as described in Jpn. Pat. Appln. KOKAI Publication No. 06-6807, an image comparison apparatus has heretofore been considered which performs comparison observation using a reference image stored as a digital image. This image comparison apparatus stores a plurality of images (hereinafter referred to as "comparative images") taken from a television camera as digital data, takes out half of reference images and half of the comparative images, and laminates the respective images to thereby display one image on a monitor, so that comparison/judgment as to whether or not right/left images agree with each other can be easily confirmed.

Additionally, in the Jpn. Pat. Appln. KOKAI Publication No. 06-6807, the reference image to be recorded is called, and compared with the comparative image on the monitor. However, static images which have already been taken are arranged, and it is therefore difficult to align a position to be compared with the reference image with the comparative image. Since the reference image and the comparative image are simply juxtaposed on the monitor, it is difficult to find out differences. Furthermore, to compare the reference image with the comparative image, photographing conditions of these images, such as magnifications and positions, are preferably matched, but it is difficult to match these conditions, and further a problem occurs that a portion of the comparative image to be compared with the reference image differs with observers.

Disclosure of Invention

An object of the present invention is to provide an image comparison apparatus capable of simplifying positioning of a reference image with a comparative image or automatically matching and photographing a portion of the comparative image to be compared on the same conditions as those of the reference image and performing high-precision image comparison, an image comparison method, and a program to execute image comparison by a computer.

An image comparison apparatus according to a first aspect of the present invention comprises: observation image take-in means for taking in one of a macro observation image and a micro observation image of a sample; imaging means for photographing the observation image taken in by the observation image take-in means; recording means for recording a reference image prepared beforehand; display means for displaying the observation image photographed by the imaging means as a comparative image; and control means for correcting the reference image in such a manner that a position and a magnification of the reference image recorded in the recording means are the same as those of the comparative image displayed in the display means, and displaying the reference image on the display means in such a manner as to be comparable with the comparative image.

An image comparison apparatus according to a second aspect of the present invention comprises: observation image take-in means for taking in one of a macro observation image and a micro observation image of a sample; imaging means for photographing the observation image taken in by the observation image take-in means; recording means for recording a reference image prepared beforehand; display means for displaying the reference image recorded in the recording means; and control means for correcting the comparative image in such a manner that a position and a magnification of the observation image photographed by the imaging means are the same as those of the reference image displayed in the display means, and displaying the comparative image on the display means in such a manner as to be comparable with the reference image.

An image comparison apparatus according to a third aspect of the present invention comprises: observation image take-in means for taking in one of a macro observation image and a micro observation image of a sample; imaging means for photographing the observation image taken in by the observation image take-in means; recording means for recording an observation image photographed by the imaging means and observation conditions by the observation image take-in means and the imaging means; display means for displaying the observation image recorded in the recording means as a reference image; and control means for reproducing states of the observation image take-in means and the imaging means based on the observation conditions of the observation image recorded in the recording means, and displaying the observation image photographed by the imaging means as a comparative image in such a manner as to be comparable with the reference image.

An image comparison apparatus according to a fourth aspect of the present invention comprises: observation image take-in means for taking in a macro observation image of a sample; imaging means for photographing the observation image taken in by the observation image take-in means recording means for recording the observation image photographed by the imaging means and observation conditions by the observation image take-in means and the imaging means; display means for displaying the observation image recorded in the recording means; and control means for reproducing states of the observation image take-in means and the imaging means based on the observation conditions of the observation image recorded in the recording means, and displaying the observation image photographed by the imaging means as a comparative image in such a manner as to be comparable with the reference image.

An image comparison method according to a fifth aspect of the present invention comprises: taking in one of a macro observation image and a micro observation image of a sample, and photographing the taken-in observation image; and displaying the photographed observation image on display means as a comparative image, correcting the reference image in such a manner that a position and a magnification of the reference image prepared beforehand are the same as those of the comparative image displayed on the display means, and displaying the reference image on the display means in such a manner as to be comparable with the comparative image.

An image comparison method according to a sixth aspect of the present invention comprises: taking in one of a macro observation image and a micro observation image of a sample, and photographing the taken-in observation image; and displaying the reference image prepared beforehand, correcting the comparative image in such a manner that a position and a magnification of the photographed observation image are the same as those of the reference image displayed on the display means, and displaying the comparative image on the display means in such a manner as to be comparable with the reference image.

An image comparison method according to a seventh aspect of the present invention comprises: taking in one of a macro observation image and a micro observation image of a sample, and photographing the taken-in observation image; recording the photographed observation image and observation condition of the observation image; and displaying the recorded observation image on display means as a reference image, reproducing states of the taking-in and photographing the observation image based on the observation condition of the recorded observation image, and displaying the photographed observation image with the reproduced condition on the display means in such a manner as to be comparable with the reference image.

An image comparison method according to an eighth aspect of the present invention comprises: taking in a macro observation image of a sample, and photographing the taken-in observation image; recording the photographed observation image and observation condition of the observation image; and displaying the recorded observation image on display means as a reference image, reproducing states of the taking-in and photographing the observation image based on the observation condition of the recorded observation image, and displaying the photographed observation image with the reproduced condition on the display means in such a manner as to be comparable with the reference image.

A computer-readable program for executing an image comparison on a computer, according to a ninth aspect of the present invention comprises: take-in processing program code for taking in one of a macro observation image and a micro observation image of a sample, and photographing the taken-in observation image; and display processing program code for displaying the photographed observation image on display means as a comparative image, correcting the reference image in such a manner that a position and a magnification of the reference image prepared beforehand are the same as those of the comparative image displayed on the display means, and displaying the reference image on the display means in such a manner as to be comparable with the comparative image.

A computer-readable program for executing an image comparison on a computer, according to a tenth aspect of the present invention comprises: take-in processing program code for taking in one of a macro observation image and a micro observation image of a sample, and photographing the taken-in observation image; and display processing program code for displaying the reference image prepared beforehand, correcting the comparative image in such a manner that a position and a magnification of the photographed observation image are the same as those of the reference image displayed on the display means, and displaying the comparative image on the display means in such a manner as to be comparable with the reference image.

A computer-readable program for executing an image comparison on a computer, according to an eleventh aspect of the present invention comprises: take-in processing program code for taking in one of a macro observation image and a micro observation image of a sample taken-in by observation image take-in means, and photographing the taken-in observation image by imaging means; record processing program code for recording the observation image photographed by the imaging means and observation condition by the observation image take-in means and the imaging means in recoding means; display processing program code for displaying the observation image recorded in the recording means as a reference image; and display processing program code for reproducing states of the taking-in and photographing the observation image based on the observation condition of the recorded observation image, and displaying the photographed observation image with the reproduced condition on the display means in such a manner as to be comparable with the reference image.

A computer-readable program for executing an image comparison on a computer, according to a twelfth aspect of the present invention comprises: take-in processing program code for taking in a micro observation image of a sample by observation image take-in means, and photographing the taken-in observation image with imaging means; storage processing program code for storing the observation image photographed by the imaging means and an observation condition of by the observation image take-in means and the imaging means in recording means; display processing program code for displaying the observation image recorded in the recording means on the display means as a reference image; and display processing program code for reproducing states of the taking-in and photographing the observation image based on the observation condition of the recorded observation image, and displaying the photographed observation image with the reproduced condition on the display means in such a manner as to be comparable with the reference image.

Brief Description of Drawings

FIG. 1 is a block diagram of a microscope image comparison apparatus of a first embodiment of the present invention;
FIG. 2 is a diagram showing a system constitution of the microscope image comparison apparatus of the first embodiment;
FIG. 3 is a diagram showing a display example of a monitor for use in the first embodiment;
FIGS. 4A to 4F are diagrams showing display examples for comparing a reference image with a comparative image in the first embodiment;
FIGS. 5A to 5F are diagrams showing display examples for comparing another reference image with another comparative image in the first embodiment;
FIGS. 6A to 6D are diagrams showing display examples for comparing another reference image with another comparative image in the first embodiment;
FIG. 7 is a flowchart showing an overlap process in the first embodiment;
FIG. 8 is a diagram showing other display examples for comparing the reference image with the comparative image in the first embodiment;
FIGS. 9A to 9E are explanatory views showing a method to match positions and magnifications of the reference image with those of the comparative image in the first embodiment;
FIG. 10 is a flowchart showing a method to match the positions and magnifications of the reference image with those of the comparative image in the first embodiment;
FIG. 11 is a diagram showing a system constitution of a microscope image comparison apparatus of a second embodiment of the present invention;

FIGS. 12A to 12E are explanatory views of a method to match positions and magnifications of a reference image with those of a comparative image in the second embodiment;
FIG. 13 is a flowchart showing a method to match the positions and magnifications of the reference image with those of the comparative image in the second embodiment;
FIG. 14 is a diagram showing a display example of a monitor for use in a third embodiment;
FIG. 15 is a flowchart showing an operation of the third embodiment;
FIG. 16 is a flowchart showing an operation of the third embodiment;
FIG. 17 is a flowchart showing an operation of the third embodiment; and
FIG. 18 is a flowchart showing an operation of the third embodiment.

Best Mode for Carrying Out the Invention

Embodiments of the present invention will be described hereinafter with reference to the drawings.

(First Embodiment)

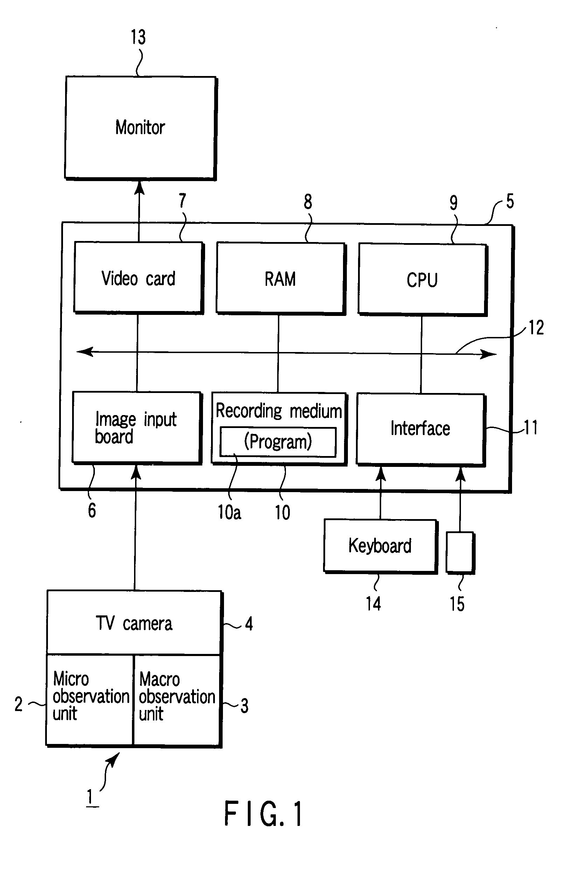

FIG. 1 shows a block diagram of a microscope image comparison apparatus constituting an image comparison apparatus to which the present invention is applied.
In FIG. 1, an observation apparatus 1 comprising a microscope which observes a sample (not shown) has: a micro observation unit 2 to take in a microscope observation image, which is micro observation image take-in means for taking in a micro observation image of the sample; a macro observation unit 3 which is macro observation image take-in means for taking in a macro observation image of the sample; and a TV camera 4 which is imaging means.
The TV camera 4 picks up micro and macro observation images taken in by the micro observation unit 2 and the macro observation unit 3, respectively, and outputs the picked-up images as digital images to a personal computer main body 5 which is control means.
The personal computer main body 5 has an image input board 6, a video card 7, a RAM 8, a CPU 9, a recording medium 10, an interface 11, and a bus 12, and takes the digital image from the TV camera 4 into the image input board 6, and stores the taken-in digital image in the RAM 8, or displays a still or moving image on a monitor 13 which is display means via the video card 7 (as to the moving image, a moving image having a video rate of the TV camera 4 is reflected). A plurality of digitized reference images prepared beforehand, and a program 10a such as sentence discernment support software described later are recorded in the recording medium 10. The program 10a recorded in the recording medium 10 is read, thereafter once stored in the RAM 8 via the bus 12, and executed by the CPU 9 to thereby perform an image comparison process. The interface 11 is connected to a keyboard 14 and a mouse 15 which input an instruction during execution of the program 10a.

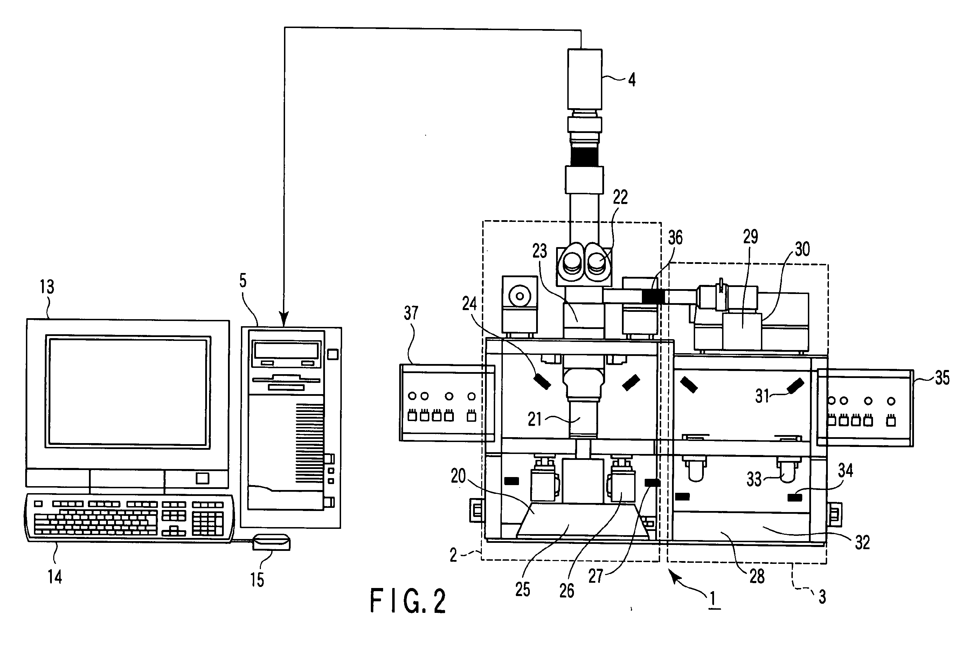

FIG. 2 is a diagram showing a system constitution of the above-described microscope image comparison apparatus, and the same part as that of FIG. 1 is denoted with the same reference numerals.

In FIG. 2, in the observation apparatus 1, the micro observation unit 2 and the macro observation unit 3 are integrally constituted.

The micro observation unit 2 is used as micro observation image acquisition means for enlarging and observing precise printing or processing of a sample. The micro observation unit 2 comprises an objective lens 21 disposed facing a sample (not shown) laid on a base 20. A precisely printed or processed state of the sample is enlarged through the objective lens 21. An enlarged sample image is visually observable by eyepiece lenses 22, and picked up by the TV camera 4, and further taken into the personal computer main body 5.

In the micro observation unit 2, as illumination devices, deflection illumination 23, incident-illumination 24, transmission illumination 25, fluorescent incident-illumination 26, and eccentric projection illumination 27 are prepared. The deflection illumination 23 illuminates the sample laid on the base 20 along an optical axis of the objective lens 21. The incident-illumination 24 illuminates the sample from a position deviating from the optical axis of the objective lens 21. The transmission illumination 25 illuminates the sample in a direction of the objective lens 21 from the inside of the base 20. By the transmission illumination 25, an outer shape of the sample or an image transmitted through the sample can be observed. The fluorescent incident-illumination 26 is illumination for observing a fluorescent image, and special printing such as fluorescent printing of the sample can be observed by the fluorescent incident-illumination 26. The eccentric projection illumination 27 obliquely illuminates the sample, and any special concave/convex processing such as stamping of the sample can be observed by the eccentric projection illumination 27.

In the deflection illumination 23, incident-illumination 24, transmission illumination 25, fluorescent incident-illumination 26, and eccentric projection illumination 27, lighting, extinguishing, and adjusting of brightness can be performed by operation in a micro control box 37.

The macro observation unit 3 is used as macro observation image take-in means for observing a sample in a comparatively broad view field and broad range. The macro observation unit 3 has a macro lens 29 disposed facing the sample (not shown) laid on a base 28. An image of the sample is guided into an optical path on the side of the micro observation unit 2 via the macro lens 29 and a macro focusing handle 36, becomes visually observable by the eyepiece lenses 22, and is picked up by the TV camera 4 and taken into the personal computer main body 5.

In the micro observation unit 2, as illumination devices, deflection illumination 30, incident-illumination 31, transmission illumination 32, fluorescent incident-illumination 33, and eccentric projection illumination 34 are prepared. The deflection illumination 30 illuminates the sample laid on the base 28 along an optical axis of the macro lens 29. The incident-illumination 31 illuminates the sample from a position deviating from the optical axis of the macro lens 29. The transmission illumination 32 illuminates the sample in a direction of the macro lens 29 from the inside of the base 28. By the transmission illumination 32, an outer shape of the sample or an image transmitted through the sample can be observed. The fluorescent incident-illumination 33 is illumination for observing a fluorescent image, and special printing such as fluorescent printing of the sample can be observed by the fluorescent incident-illumination 33. The eccentric projection illumination 34 obliquely illuminates the sample, and any special concave/convex processing such as stamping of the sample can be observed by the eccentric projection illumination 34.

In the deflection illumination 30, incident-illumination 31, transmission illumination 32, fluorescent incident-illumination 33, and eccentric projection illumination 34, lighting, extinguishing, and adjusting of brightness can be performed by operation in a macro control box 35.

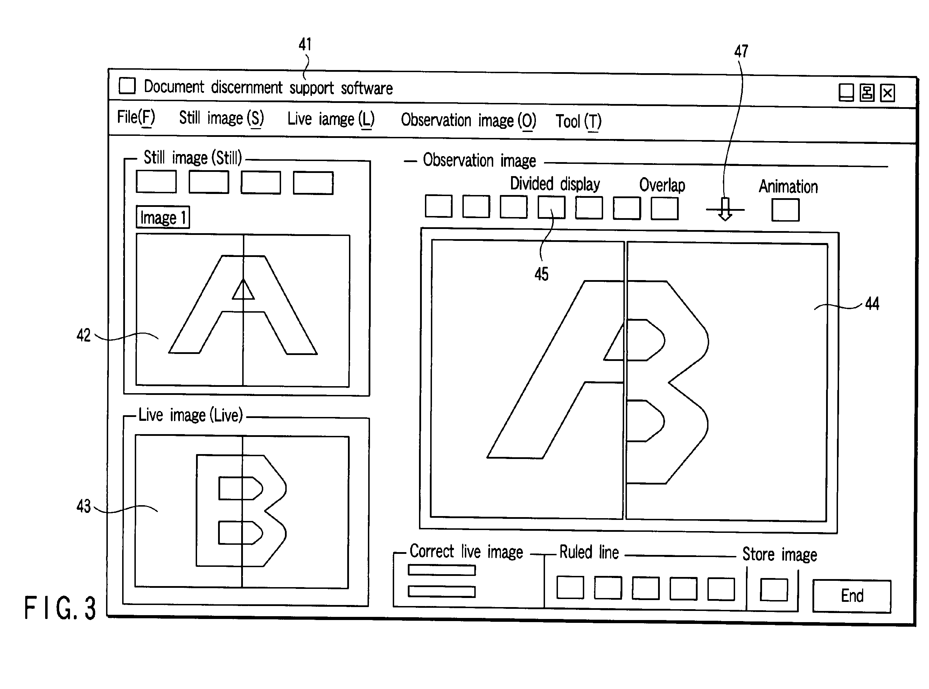

FIG. 3 is a diagram showing one example of a graphical user interface (GUI) 41 displayed on the monitor 13, when image comparison software of the program 10a (see FIG. 1) recorded in the recording medium 10 is started. The GUI 41 shown in FIG. 3 is displayed as a Window screen, for example, using an operation system such as Windows of Microsoft Co., Ltd or the like.

The GUI 41 has a still image display region 42 which is a first image display region and a moving image display region 43 which is a second image display region. As a reference image, a digital image can be displayed as a still image in the still image display region 42. The "reference image" may be, for example, an image obtained by photographing a character of a sentence or a forged portion of a printed matter sample by the TV camera 4, or by photographing a real sample by the TV camera 4. The reference image is recorded as the digital image beforehand in the recording medium 10 of the personal computer main body 5.

A moving image photographed by the TV camera 4 can be displayed as a comparative image in the moving image display region 43. The "comparative image" is an image (moving image) of a sample to be observed. Concretely, this is because the moving image obtained by photographing a micro or macro observation image of the sample taken in by the micro observation unit 2 or the macro observation unit 3 by the TV camera 4 is the comparative image. In this case, the image photographed by the TV camera 4 in order to obtain the comparative image may be on either a micro observation unit 2 side or a macro observation unit 3 side, and an observer can optionally select an image to be observed in accordance with a purpose. The moving image can be displayed in the moving image display region 43, but can be temporarily displayed as the still image after moving the sample to thereby determine a position to be observed.

The GUI 41 has an observation image display region 44 which is a third image display region. The still image displayed in the still image display region 42 and the moving image displayed in the moving image display region 43 can be displayed in the observation image display region 44 by the following various display methods.

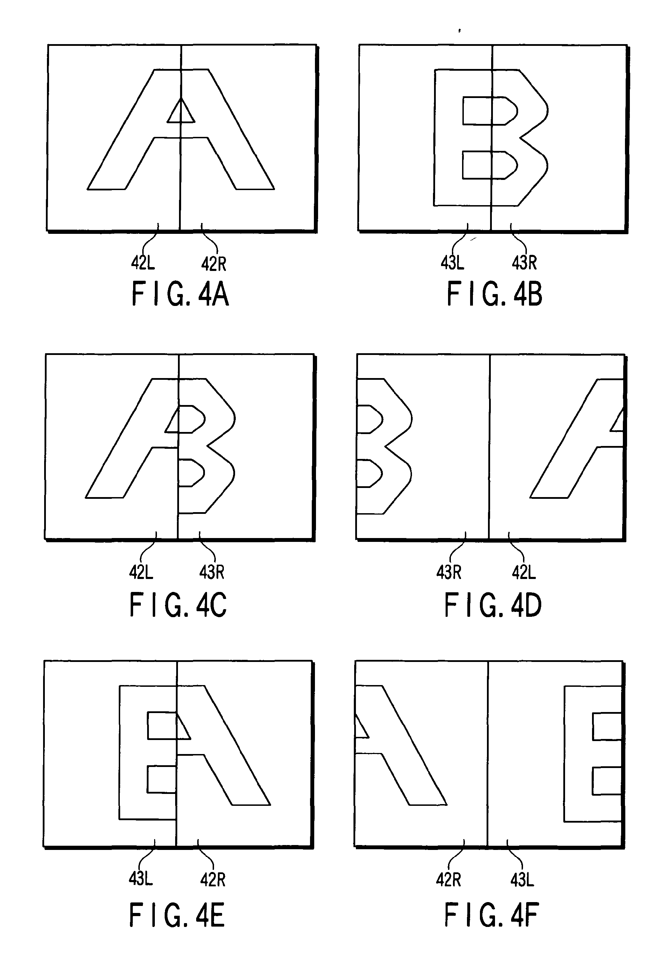

FIGS. 4A to 9A to 9E are explanatory views of various display examples in the observation image display region 44.

FIGS. 4A to 4F are diagrams showing display examples in a case where the reference image of the still image display region 42 and the comparative image of the moving image display region 43 are arranged side by side and compared in the observation image display region 44. In this case, FIG. 4A is a diagram showing the reference image of the still image display region 42, its left half is still image left 42L, and right half is still image right 42R. FIG. 4B is a diagram showing the comparative image of the moving image display region 43, its left half is moving image left 43L, and right half is moving image right 43R.

Moreover, FIG. 4C is a diagram showing the observation image in the observation image display region 4, the reference image of the still image left 42L is displayed in left half of the observation image, and the comparative image of the moving image right 43R is displayed in right half. In FIG. 4D, the comparative image of the moving image right 43R is displayed in the left half, and the reference image of the still image left 42L is displayed in the right half. In FIG. 4E, the comparative image of the moving image left 43L is displayed in the left half, and the reference image of the still image right 42R is displayed in the right half. In FIG. 4F, the reference image of the still image right 42R is displayed in the left half, and the comparative image of the moving image left 43L is displayed in the right half. In FIGS. 4A to 4F, the moving image left 43L and the moving image right 43R are images obtained by displaying the images photographed by the TV camera 4 in real time (video rate). Therefore, while moving the sample, a position to be observed can be adjusted with respect to the still image left 42L or the still image right 42R. At a time when the still image and the moving image are positioned, the moving image can be temporarily compared as the still image.

In FIGS. 4A to 4F, right/left division ratios are equal, but the division ratio may be changed. For example, in FIG. 4C, a width of the still image left 42L may be narrowed, and that of the moving image right 43R may be broadened.

When the reference image and the comparative image are arranged and displayed side by side as described above, for example, a difference between real and forgery printing can be easily visually found.

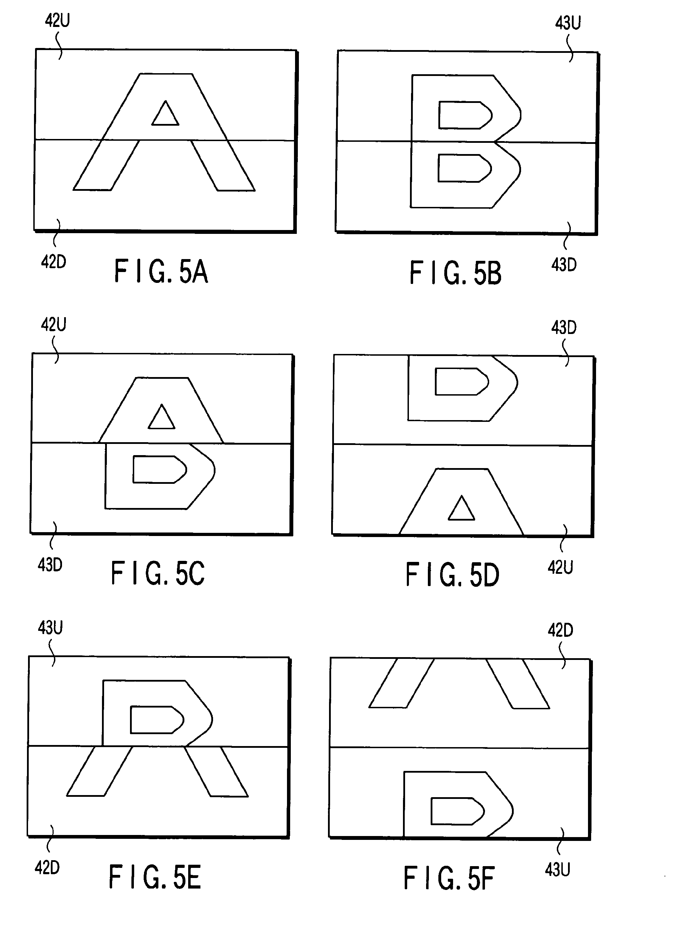

FIGS. 5A to 5F show display examples in a case where the reference image of the still image display region 42 and the comparative image of the moving image display region 43 are vertically arranged and compared in the observation image display region 44. FIG. 5A is a diagram showing the reference image of the still image display region 42, its upper half is still image up 42U, and lower half is still image down 42D. FIG. 5B is a diagram showing the comparative image of the moving image display region 43, its upper half is moving image up 43U, and lower half is moving image down 43D.

FIG. 5C is a diagram showing the observation image in the observation image display region 44. In the observation image of FIG. 5C, the reference image of the still image up 42U is displayed in the upper half, and the comparative image of the moving image down 43D is displayed in the lower half. In FIG. 5D, the comparative image of the moving image down 43D is displayed in the upper half, and the reference image of the still image up 42U is displayed in the lower half. In FIG. 5E, the comparative image of the moving image up 43U is displayed in the upper half, and the reference image of the still image down 42D is displayed in the lower half. In FIG. 5F, the reference image of the still image down 42D is displayed in the upper half, and the comparative image of the moving image up 43U is displayed in the lower half. Also in this case, in the moving image up 43U and the moving image down 43D, the images photographed by the TV camera 4, respectively, are displayed in the real time (video rate). While moving the sample, a position to be observed can be adjusted with respect to the still image up 42U or the still image down 42D. At a time when the still image and the moving image are positioned, the moving image can be temporarily compared as the still image.

Switching of screen displays shown in FIGS. 4A to 4F and FIGS. 5A to 5F can be easily executed by clicking, for example, an icon 45 of "divided display" on the GUI 41.

Even when the reference image and the comparative image are vertically arranged and displayed as described above, for example, a difference between real and forgery printing can be easily visually found.

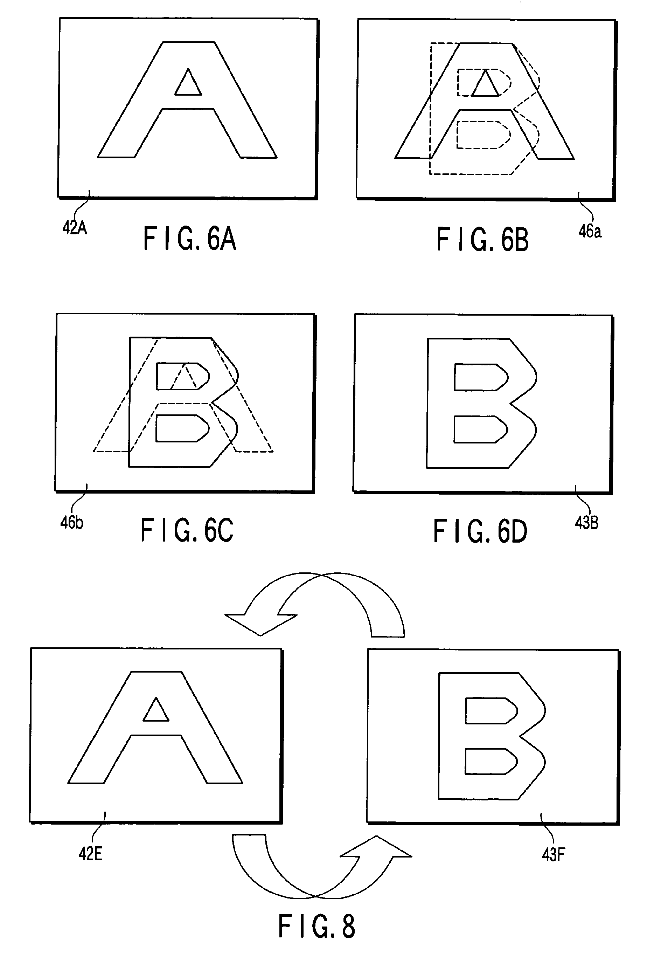

FIGS. 6A to 6D are diagrams showing display examples in a case where the reference image of the still image display region 42 is overlapped (image is added) and displayed with the comparative image of the moving image display region 43 in the observation image display region 44.

FIG. 6A is a diagram showing the observation image of the observation image display region 44. In FIG. 6A, a still image 42A only which is the reference image of the still image display region 42 is displayed.

FIG. 6B shows a display example of an overlapped image 46a, a moving image 43B (FIG. 6D) which is the comparative image of the moving image display region 43 is added to the still image 42A as described later in detail, and the overlapped image 46a is displayed. In this case, two images are added up as follows. For example, in a case where each of digital images of an A image and a B image is constituted of 640 x 480 pixels, luminance of one certain pixel of the A image is assumed as Ia(x, y), and luminance of the pixel of the B image in the same position is assumed as Ib(x, y). At this time, luminance I(x, y) of the overlapped image is obtained as follows:

$$I(x, y) = Ia(x, y) \times m + Ib(x, y) \times n,$$

where m = 1-n; $(0 \leq n \leq 1)$.
When this calculation is performed with respect to all the pixels, the images can be added up. In the overlapped image 46a of FIG. 6B, a ratio (i.e., luminance, hereinafter referred to as "ratio") of the still image 42A is greater than that of the moving image 43B, and therefore the image of the still image 42A is more clearly visible. Conversely, in an overlapped image 46b of FIG. 6C, unlike the above-described overlapped image 46a, the ratio of the still image 42A is smaller than that of the moving image 43B, and therefore the image of the moving image 43B is more clearly visible. Accordingly, when the ratio of the still image 42A is increased, finally the only still image 42A of FIG. 6A is displayed. Conversely, when the ratio of the moving image 43B is increased, the only moving image 43B of FIG. 6D is displayed.

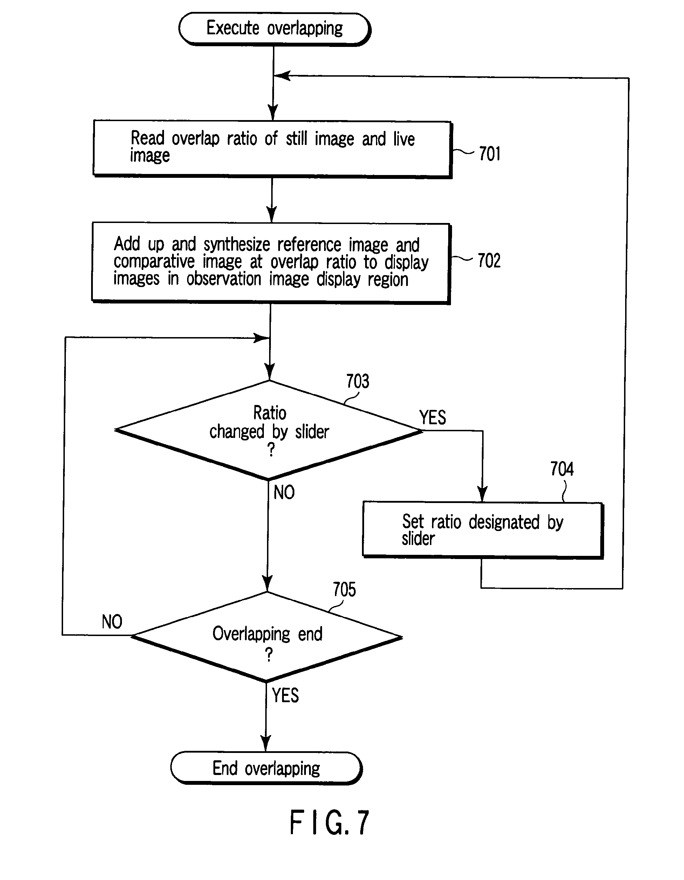

The above-described overlapping process will be described with reference to a flowchart shown in FIG. 7.

First, an overlap ratio of the still image 42A and the moving image 43B recorded in the recording medium 10 is read (step 701). The overlap ratio is determined by values of m and n in the above-described equation. Next, the still image 42A and moving image 43B are added up and synthesized at the read overlap ratio (hereinafter referred to simply as the "ratio") and displayed in the observation image display region 44 (step 702). Here, the ratio is calculated with respect to all the pixels of the image in the above-described equation, and results are displayed. It is confirmed whether or not the ratio has been updated by operation of a slider 47 shown in FIG. 3 (step 703). The overlap ratio can be easily adjusted, when an operator moves the slider 47 on the GUI 41 shown in FIG. 3. When the ratio is changed by the operation of the slider 47 in step 703, the value designated by the slider 47 is set again as a value of the overlap ratio stored in the RAM 8 or the recording medium 10 (step 704).

The process returns to the step 701 to repeat similar process. When the ratio is not changed in the step 703, the process advances to step 705, and it is confirmed whether or not to end the overlapping process. When the process does not ended in the step 705, the process returns to the step 703 to repeat the similar process. When the process ends, a series of overlapping process is ended.

The reference image and comparative image are added up, superimposed upon each other, and overlapped/displayed. For example, when a real article and forgery printing are superimposed and displayed upon each other, a difference between the both can be easily visually found.

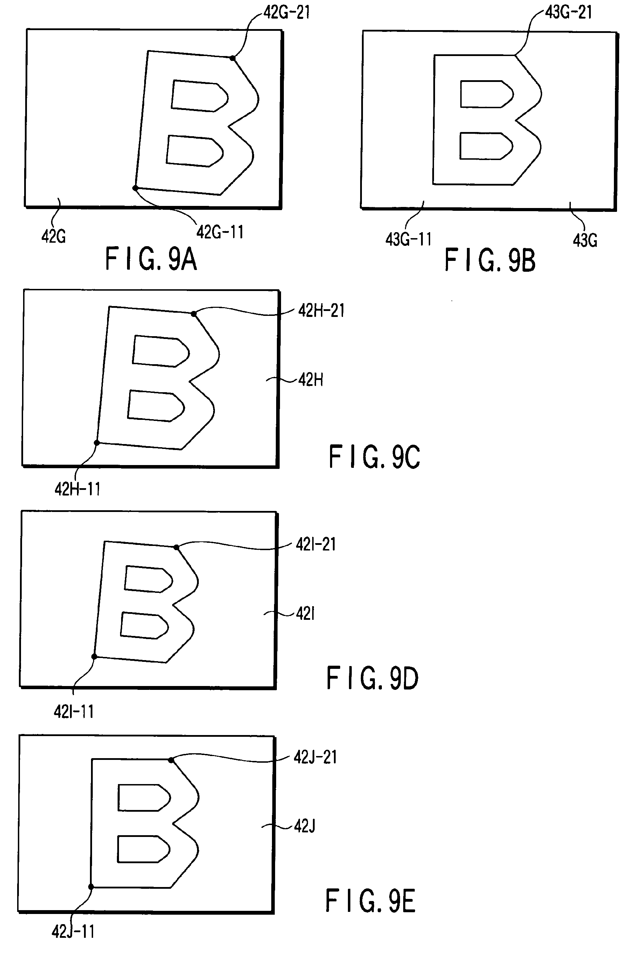

FIG. 8 is a diagram showing a display example in a case where the reference image of the still image display region 42 and the comparative image of the moving image display region 43 are alternately switched and displayed at a certain time interval to thereby compare both the images with each other in the observation image display region 44.

Image switch display means for alternately switching the reference image and the comparative image will be described. In the image switch display, first the reference image displayed in the still image display region 42 is displayed as a still image 42E in the observation image display region 44. Thereafter, in the image switch display, the comparative image displayed in the moving image display region 43 is displayed as a moving image 43F in the observation image display region 44 after a certain time. In the image switch display, the still image 42E is displayed further after a certain time. In the image switch display, the above-described process is continuously executed. In an image switch display process, for example, a predetermined icon on the GUI 41 displayed on the monitor 13 can be clicked to execute the program. When the above-described certain time interval is input from the GUI 41, a switch time of the image can be changed to an optional value.

When two images are successively switched/displayed as described above to utilize an afterimage in human eyes as in animation, for example, a difference of printing between a real document and forged document can be easily visually found.

Additionally, when the positions or the magnifications of the reference image and comparative image shift from each other in a case where the reference image and comparative image are horizontally or vertically arranged and displayed, or alternately switched and displayed at a certain time interval to thereby compare both the images, exact comparison cannot be performed in some case.

To solve the problem, the following method has heretofore been adopted. An observer operates a stage, and moves the position of the sample to adjust the position of the comparative image (moving image) of the moving image display region 43, and changes the magnification of the objective lens of the microscope to adjust the magnification of the image. Accordingly, a method of adapting the comparative image (moving image) to the reference image of the still image display region 42 has been adopted. In this method, however, it is difficult to adjust the position or the magnification of the comparative image enlarged at a large magnification, and this is time-consuming. Especially, in a case where a fluorescent image is observed, the image is very dark, and images are integrated to display the moving image. Therefore, much time is required for the process. A time shift occurs from when operating the stage to move the position of the sample until the display changes to that after the movement. Therefore, it is further difficult to match the images.

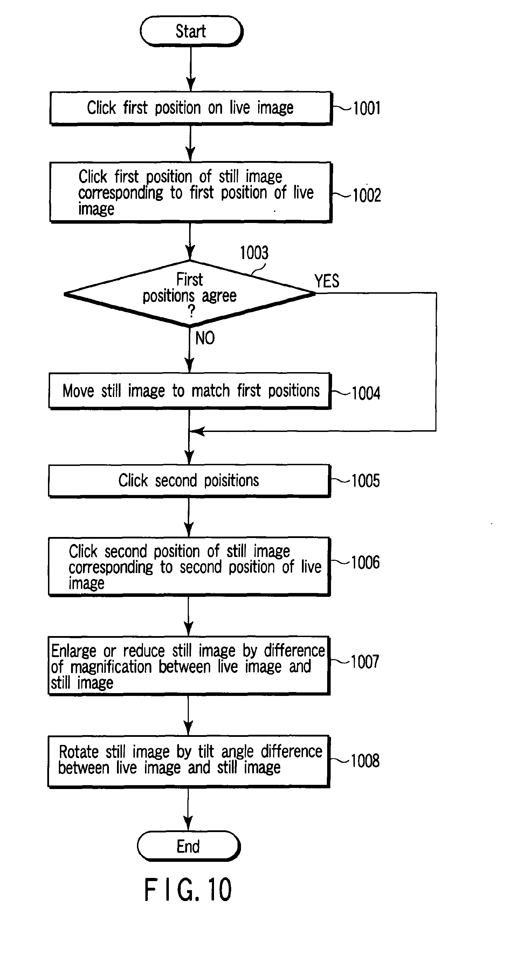

FIGS. 9A to 9E are diagrams showing a correction method in a case where image positions or magnifications of the reference image of the still image display region 42 and the comparative image of the moving image display region 43 shift. This correction method will be described with reference to FIGS. 9A to 9E and a flowchart shown in FIG. 10.

A position of a still image 42G which is the reference image of the still image display region 42 shown in FIG. 9A is compared with two characteristic positions of a moving image 43G which is the comparative image of the moving image display region 43 shown in FIG. 9B, the position or the magnification of the still image 42G is changed, and the image is matched with the moving image 43G. Image processing is performed in this manner.

An observer clicks a characteristic first position 43G-11 of the moving image 43G shown in FIG. 9B on a screen of the monitor 13 using the mouse 15 (step 1001). Next, the observer clicks a position of the still image 42G shown in FIG. 9A, corresponding to the characteristic first position 43G-11 of the moving image 43G as a first position 42G-11 on the screen of the monitor 13 using the mouse 15 (step 1002).

Next, it is judged whether or not these characteristic first positions 43G-11 and 42G-11 agree with each other (step 1003). In this case, the moving image display region 43 and the still image display region 42 are regarded as the same region, and it is judged whether or not the first position 43G-11 agrees with 42G-11.

When these positions do not agree with each other in the step 1003, image processing is performed in such a manner as to move the still image 42G in X, Y directions in the still image display region 42, and the first position 42G-11 is matched with the first position 43G-11 of the moving image 43G of the moving image display region 43 regarded as the same region (step 1004).

FIG. 9C is a diagram showing display in the still image display region 42 after the above-described image processing. As shown in FIG. 9C, a moved still image 42H and a new first position 42H-11 are displayed in the still image display region 42.

Next, the observer clicks a characteristic second position 43G-21 of the moving image 43G shown in FIG. 9B on the screen of the monitor 13 using the mouse 15 again (step 1005). Next, the observer similarly clicks a position on the still image 42H shown in FIG. 9C, corresponding to the characteristic second position 43G-21 of the moving image 43G as a second position 42H-21 on the screen of the monitor 13 using the mouse 15 (step 1006).

Next, a difference of the magnification between the moving image 43G and the still image 42H is obtained. In this case, a magnification difference K is obtained by K = (distance between 42G-11 and 42G-21)/(distance between 43G-11 and 43G-21). Moreover, image processing is performed in such a manner as to enlarge or reduce the still image 42H based on the obtained magnification K in the still image display region 42 (step 1007).

FIG. 9D is a diagram showing the display in the still image display region 42 after the image processing. According to FIG. 9D, in the still image display region 42, an enlarged or reduced still image 42I, a new first position 42I-11, and a second position 42I-21 are displayed.

Next, an angle difference φ between tilt of the moving image 43G shown in FIG. 9B, that is, the tilt of a straight line connecting the position 43G-11 to 43G-21, and the tilt of the straight line connecting the position 42I-11 of the still image 42I shown in FIG. 9D to 42I-21 is obtained. Moreover, when there is the angle difference φ, image processing is performed in such a manner as to rotate the still image 42I centering on the straight line connecting the position 42I-11 to 42I-21 by the angle φ in the still image display region 42 (step 1008).

FIG. 9E is a diagram showing the display in the still image display region 42 after the above-described image processing. According to FIG. 9E, a rotated still image 42J, a new first position 42J-11, and a second position 42J-21 are displayed in the still image display region 42.

By the above-described series of image processing, the positions and magnifications of the still image 42J displayed in the still image display region 42 and the moving image 43G of the moving image display region 43 can be easily and precisely matched.

Accordingly, the observation image of the sample is taken into the personal computer main body 5 from the micro observation unit 2 or the macro observation unit 3 via the TV camera 4, and displayed as the comparative image on the GUI 41 of the monitor 13, and this image can be compared/displayed at the same position and magnification as those of the reference image recorded beforehand. Therefore, high-reliability discernment can be performed with respect to printed matters or special printings such as identification cards.

It is to be noted that after matching the position or the magnification of the still image with that of the moving image, the observer may recognize the movement of the position by colors, shapes or the like of the characteristic first position and second position of the moving image designated by the observer. The position and magnification of the still image may be automatically changed at the certain time interval, and the image may be displayed in the still image display region 42. In the above-described processing, the observer first designates the characteristic first and second positions, but two characteristic positions may be automatically determined by the image processing. Even when the position and magnification of the still image are automatically changed without designating the characteristic positions by the observer, and the image is displayed in the still image display region 42, a similar effect is obtained.

(Second Embodiment)

In the first embodiment, the sample on the base 28 is compared/observed with the reference image from a viewpoint in a broad view field and range using the macro observation unit 3, and, if necessary, the sample is moved onto the base 20 of the micro observation unit 2, and precise printing or processing is enlarged and compared/observed with the reference image. In a second embodiment, these operation can be automated.

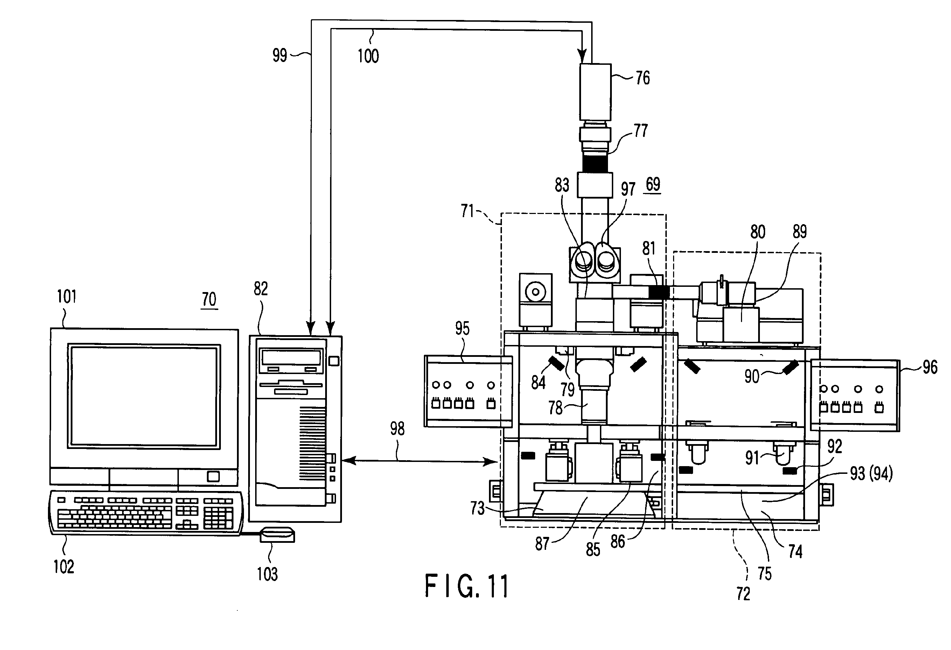

FIG. 11 is a diagram showing a schematic constitution diagram of a microscope image comparison apparatus.

The microscope image comparison apparatus shown in FIG. 11 comprises an observation device 69 and an image processing device 70. The observation device 69 comprises a micro observation unit 71 which is micro observation image take-in means and a macro observation unit 72 which is macro observation image take-in means, the units being integrally constituted. In the micro observation unit 71 and the macro observation unit 72, a common macro•micro electromotive stage (automatic X-Y rotation stage) 75 is disposed on a base 73 (for micro) and a base 74 (for macro), respectively. When the macro•micro electromotive stage 75 is driven, a sample can be automatically transferred between the micro observation unit 71 and the macro observation unit 72.

Moreover, a TV camera 76 for photographing observation images is disposed with respect to the micro observation unit 71 and the macro observation unit 72. The TV camera 76 photographs the sample via a micro•macro electromotive zoom 77 and an objective lens 78 in the micro observation unit 71. A focus is adjusted by a micro electromotive focus 79. Furthermore, the TV camera 76 photographs the sample via the micro•macro electromotive zoom 77, an optical path switch device (not shown), and a macro lens 80 in the macro observation unit 72. The focus is adjusted by a macro electromotive focus 81.

In this case, the micro•macro electromotive zoom 77, the electromotive focuses 79, 81 of the micro observation unit 71 and macro observation unit 72, a dimmer (not shown), the optical path switch device (not shown), and the TV camera 76 are automatically controllable by a personal computer main body 82 which is control means constituting a part of the image processing device 70.

Various illumination methods are disposed in the micro observation unit 71 and the macro observation unit 72. Concretely, in the micro observation unit 71, deflection illumination 83, incident-illumination 84, fluorescent incident-illumination 85, eccentric projection illumination 86, transmission illumination 87, and infrared transmission illumination 88 are disposed. In the macro observation unit 72, deflection illumination 89, incident-illumination 90, fluorescent incident-illumination 91, eccentric projection illumination 92, transmission illumination 93, and infrared transmission illumination 94 are disposed. An illumination device is selected by the personal computer main body 82, a micro control box (manual operation box) 95, and a macro control box (manual operation box) 96 in accordance with an illumination method suitable for an observation portion or the like of a sample which is an object.

By eyepiece lenses 97, the observation image of the sample obtained by the micro observation unit 71 and macro observation unit 72 can be directly visually seen.

The observation device 69 is connected to the image processing device 70 via a macro•micro communication cable 98, a television camera video cable 99, and a television camera communication cable 100.

In addition to the personal computer main body 82, the image processing device 70 has a monitor 101 which is display means for displaying the observation image, GUI for control or the like, a keyboard 102 which is an input device, and a mouse 103. The image processing device 70 controls the observation device 69 via the macro•micro communication cable 98, takes in a video signal from the TV camera 76 via the television camera video cable 99, and further controls brightness, contrast or the like of the TV camera 76 via the television camera communication cable 100. The image processing device 70 takes an imaging signal from the TV camera 76 into a memory in the personal computer main body 82 via a video capture board (not shown) in the personal computer main body 82, and converts the signal into a signal which can be displayed as a digital image on the monitor 101.

The personal computer main body 82 is connected to the monitor 101 for displaying a menu for controlling a system, buttons, and images, the keyboard 102 for operating the menu and buttons, and the mouse 103.

The personal computer main body 82 comprises a frame memory function for displaying an image photographed by the TV camera 76, a menu and button operation function for the system control, a communication function for controlling the observation device 69 and the like. The personal computer main body 82 further comprises a memory function for temporarily storing image data. The personal computer main body 82 further comprises communication means, and is capable of storing the image photographed by the TV camera 76 and data such as photographing conditions in another personal computer by data communication with the other personal computer to thereby share the data. Examples of the communication means include Ethernet, GP-IB, parallel, serial and the like. The personal computer main body 82 outputs not only a driving instruction of the macro•micro electromotive stage 75 and instructions for focus, zoom, optical path switching, switching of the illumination method, dimmer and the like with respect to the micro observation unit 71 and the macro observation unit 72 but also a control instruction of the TV camera 76 via interfaces on the side of the observation device 69. The interfaces are contained, for example, in the observation device 69 and personal computer main body 82, and examples thereof include RS-232C, GP-IB, parallel, serial, SCSI and the like.

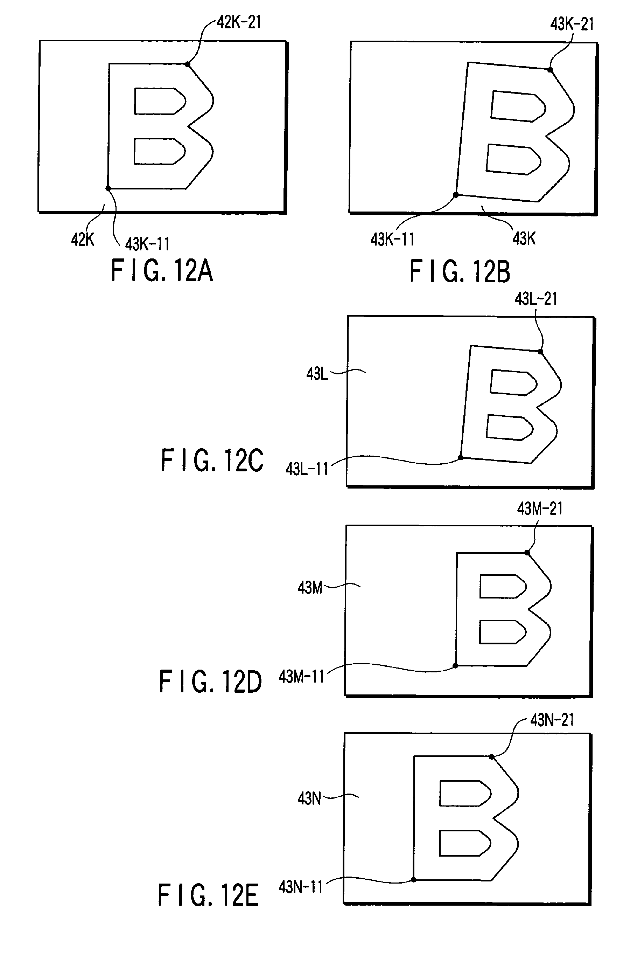

FIGS. 12A to 12E are diagrams showing a correction method in a case where image positions or magnifications of a reference image of a still image display region 42 and a comparative image of a moving image display region 43 shift in the microscope image comparison apparatus constituted as described above.

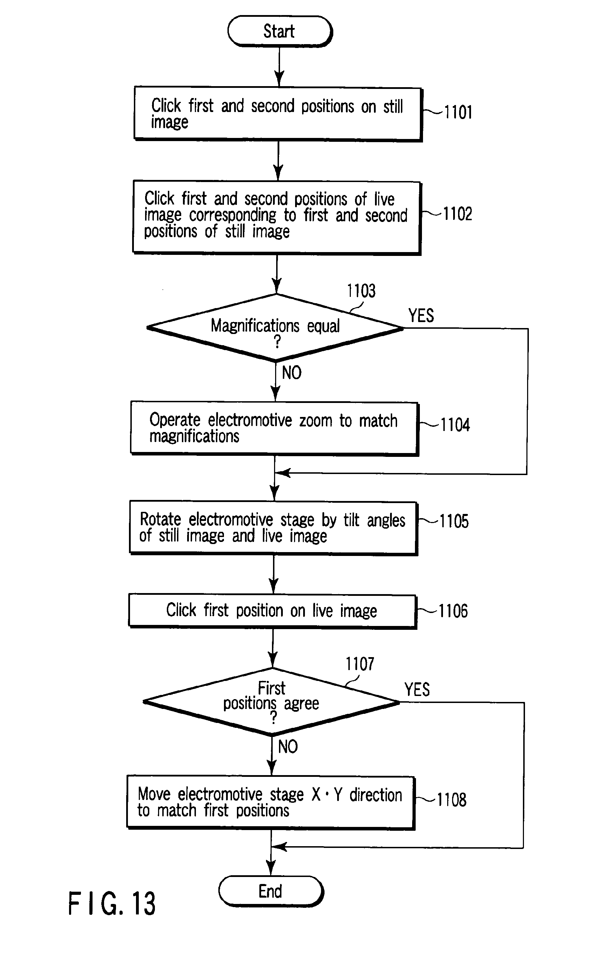

A position of a still image 42K which is the reference image of the still image display region 42 shown in FIG. 12A is compared with two characteristic positions of a moving image 43K which is the comparative image of the moving image display region 43 shown in FIG. 12B, the position or the magnification of the moving image 43K is changed, and the image is matched with the still image 42K. This image processing method will be described with reference to a flowchart of FIG. 13.

A characteristic first position 42K-11 and a second position 42K-21 on the still image 42K shown in FIG. 12A are clicked (step 1101). Next, positions corresponding to the characteristic first position 42K-11 and second position 42K-21 of the still image 42G on the moving image 43G shown in FIG. 12B are clicked as a first position 43K-11 and a second position 43K-21 (step 1102).

In this state, a difference of a magnification between the moving image 43K and the still image 42K is obtained. In this case, a magnification difference K is obtained by K = (distance between 42K-11 and 42K-21) /(distance between 43K-11 and 43K-21). Moreover, the magnifications are compared based on this obtained magnification K (step 1103). When the magnifications are different in the step 1103, the micro•macro electromotive zoom 77 is operated to thereby enlarge or reduce the moving image 43K in the moving image display region 43 (step 1104).

FIG. 12C is a diagram showing display in the moving image display region 43 after the operation of the micro•macro electromotive zoom 77. An enlarged or reduced moving image 43L and new first and second positions 43L-11, 43L-21 are displayed in the moving image display region 43.

Next, an angle difference φ between tilt of the still image 42K shown in FIG. 12A, that is, tilt of a straight line connecting the position 42K-11 to 42K-21, and the tilt of the straight line connecting the position 43L-11 of the moving image 43L shown in FIG. 12C to 43LI-21 is obtained. In this case, when there is the angle difference φ, the macro•micro electromotive stage 75 is rotated by the angle φ to thereby rotate the moving image 43K in the moving image display region 43 (step 1105).

FIG. 12D shows the display in the moving image display region 43 after the rotating operation of the macro•micro electromotive stage 75, and a rotated moving image 43M and new first and second positions 43M-11, 43M-21 are displayed in the moving image display region 43.

Next, in step 1106, one characteristic first position 43M-11 of the moving image 43M of the moving image display region 43 is clicked. Then, in step 1108, the macro•micro electromotive stage 75 moves in X, Y directions, and the first position 43M-11 of the moving image 43M is matched with the first position 42K-11 of the still image 42G. In this case, the moving image display region 43 and the still image display region 42 are regarded as the same region, and it is judged whether or not the first position 43M-11 agrees with 42K-11 (step 1107).

FIG. 12E is a diagram showing display in the moving image display region 43 after this image processing, and a moving image 43N, a new first position 43N-11, and a second position 43N-21 after movement in the X, Y directions are displayed in the moving image display region 43.

Therefore, even by these series of operation, the image positions and magnifications of the moving image 43N displayed in the moving image display region 43 and the still image 42K of the still image display region 42 can be easily and precisely matched, and an effect similar to that of the first embodiment can be expected.

In the first and second embodiments, the observer has first designated the characteristic first and second positions of the still image 42K and moving image 43K. However, when two characteristic positions are automatically determined in the image processing, and even when the observer does not designate the characteristic positions, the similar effect is automatically obtained by the operation of the micro•macro electromotive zoom 77 and macro•micro electromotive stage 75. In the first and second embodiments, the same image has been rotated by the rotation of the macro•micro electromotive stage 75, but the moving image may be rotated using an image rotator using a prism or mirror, or an optical device such as a lens. Furthermore, the moving image has been moved in the XY directions by the macro•micro electromotive stage 75, but even when the still image is moved in the XY directions to thereby match the moving image with the still image, the same effect is obtained. Furthermore, even when a high-fineness television camera is used as the TV camera 76, an image region is extracted in accordance with the magnification, the image is converted into an original resolution to thereby adjust the magnification, or a part of the image of the high-fineness camera is used as the original resolution, and an image region incorporating the movement in the XY directions is moved in the XY directions to thereby match the still image with the moving image, the same effect is obtained.

Additionally, in the first and second embodiments, the microscope image comparison apparatus used in a standing-alone state has been described. The present invention is not limited to this. A digital image required for an image server, and information such as description of a forged portion of a sentence are stored beforehand. When suspected forgery is found in a different place, related information is searched from the personal computer main body 5 via a network by the image server, and necessary information may be downloaded and used as the comparative image. In this case, the image or information of a forged article newly found in the different place is stored in the image server every time, and accordingly latest information can be obtained in real time. In this case, since confidential information such as data of forgery portions is communicated on the network, a process to manage users and encipher data needs to be performed in such a manner as to prevent the information from being leaked to the outside.

According to the first and second embodiments, there can be provided an image comparison apparatus capable of simply and precisely positioning the reference image and comparative image, an image comparison method, and a program to execute image comparison by a computer.

(Third Embodiment)

Since an apparatus constitution of a third embodiment is the same as that of the second embodiment, drawing and description are omitted. It is to be noted that in the third embodiment, the same observation conditions can be constantly automatically set even in a case where any system is used.

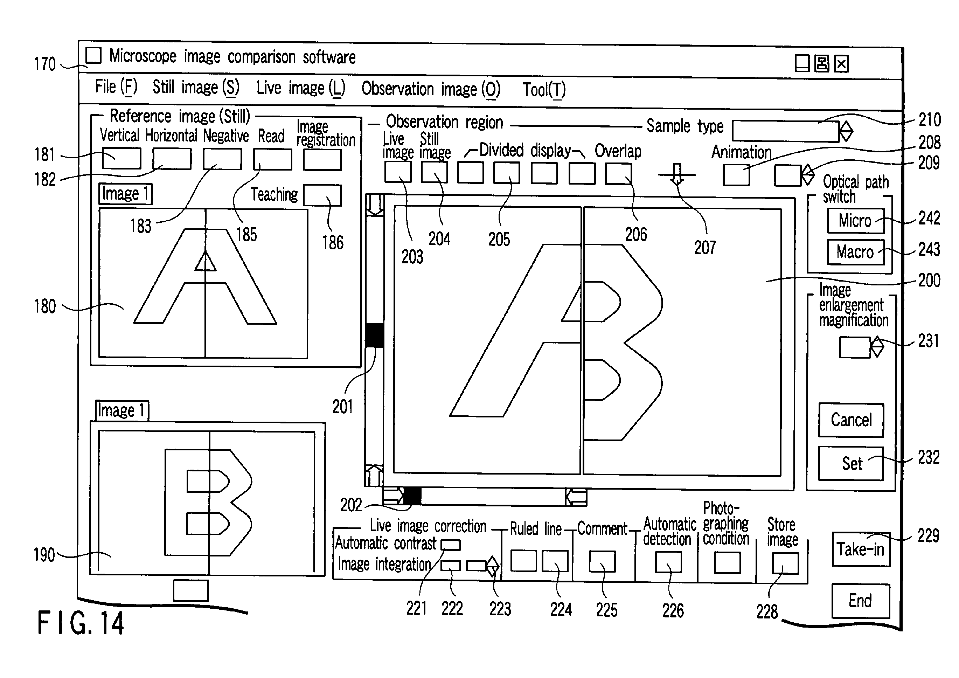

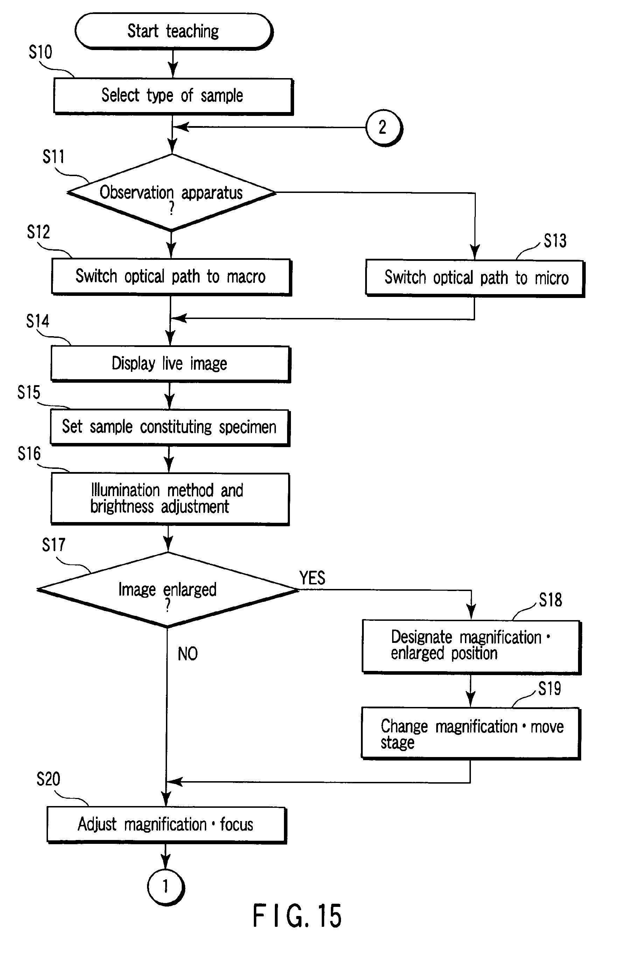

FIG. 14 shows a display example on a monitor 101 screen. FIGS. 15 to 18 are flowcharts showing a working procedure and operation according to the third embodiment.

First, since a reference image constituting a specimen needs to be registered, an observer selects a type of a sample constituting the specimen, for example, an identification card or the like from a sample type list 210 on an operation screen 170 displayed on a monitor shown in FIG. 14 (step S10).

Next, the observer selects an observation unit in an observation device 69. That is, the observer selects observation by a micro observation unit 72 or a micro observation unit 71 in accordance with a size of a region to be observed on the sample which is the specimen (step S11). In this case, the observer clicks a macro button 243 or a micro button 242 corresponding to the micro observation unit 72 or the micro observation unit 71 on the operation screen 170 of the monitor, operates an optical path switching device (not shown) of the observation device 69 to select optical path switching, and selects a desired observation unit (steps S12, S13).

Next, the observer selects a moving image button 203 from the moving image button 203 and a still image button 204 on the operation screen 170 displayed on the monitor, so that the moving image being photographed by a TV camera 76 is displayed in an observation image display region 200 (step S14).

In this state, the observer sets the sample which is the specimen on a macro•micro electromotive stage 75 of the selected observation unit (step S15). Moreover, while seeing the moving image (observation image) of the observation image display region 200, the observer selects an illumination method suitable for the sample using a macro control box 46 or a micro control box 45, and adjusts the illumination method and brightness (step S16).

Next, the observer judges whether or not to enlarge/observe details of the observation image (step S17). When the image is to be enlarged (yes), an enlargement magnification is set with a magnification change button 231, and a pointer of a mouse is brought onto the observation image. Then, the pointer displays a photographing area with the magnification designated on the observation image. Moreover, the observer clicks a position to be photographed to determine an enlargement position (step S18), and clicks a set button 232 of the operation screen 170. Then, a personal computer main body 82 calculates a central position of an image to be enlarged from a present stage position, set ratio, and a position of the mouse pointer on the observation image. Moreover, the macro•micro electromotive stage 75 automatically moves in such a manner that the central position of the image to be enlarged agrees with an optical axis of the selected observation unit, and the set sample moves to a position to be observed (step S19).

Next, the observer adjusts a zoom magnification in such a manner that the region of the sample to be observed is displayed to thereby adjust focus (step S20).

It is to be noted that when it is judged in the step S17 that the details of the observation image are not enlarged/observed, the process immediately advances to the step S20. The observer adjusts the zoom magnification in such a manner that the region of the sample to be observed is displayed, and adjusts the focus.

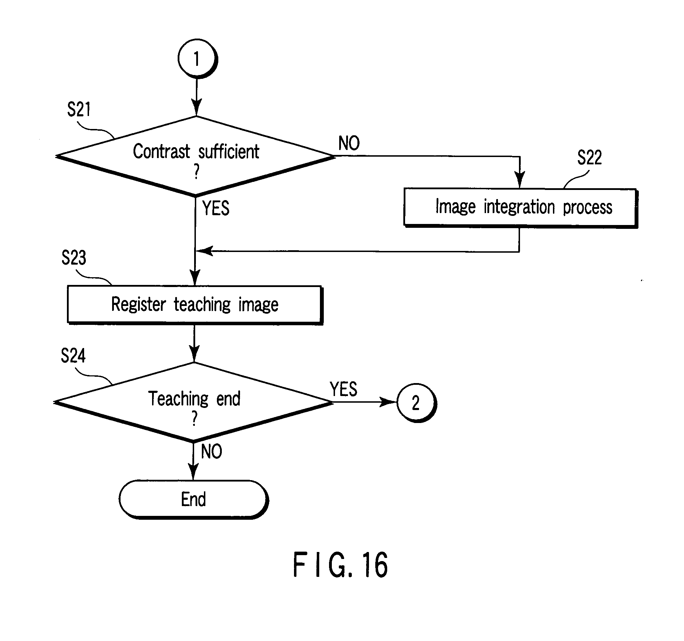

Next, in FIG. 16, the observer judges whether or not contrast of the observation image is sufficient (step S21). Here, when the contrast of fluorescent illumination or sample is little, a clear image is not obtained, and high-precision image comparison cannot be performed.

In this case, an image integration process is performed (step S22). First, the observer selects an automatic contrast button 221 existing in the operation screen 170 displayed on the monitor, and performs an automatic contrast process. Accordingly, the personal computer main body 82 applies gain or offset to the photographed image in such a manner that luminance level is optimized, changes image data, and displays the image in the observation image display region 200. While seeing the observation image, the observer adjusts the observation position, magnification, and focus of the sample. Next, the observer selects an integration button 222 existing in the operation screen 170 of the monitor to start an image integration process. Accordingly, the personal computer main body 82 stores photographed images by the set number of images, adds up the image data, and displays the data in the observation image display region 200. The observer adjusts integration times by an integration number 223 existing in the operation screen 170 of the monitor in accordance with the brightness of the sample, and adjusts the image into an image that is easily observed.

When these photographed images are prepared, a teaching button 186 on the operation screen 170 displayed on the monitor is operated to register a teaching image (i.e., reference image) (step S23). Accordingly, the personal computer main body 82 takes a video signal of the TV camera 76 as a digital image (teaching image) into the personal computer main body 82 via a video capture board, stores the taken digital image in a recording medium 10, and displays the image in a still image display region 180. The personal computer main body 82 confirms observation conditions at this time, that is, various conditions such as a position (photographed position of the digital image) of the macro•micro electromotive stage 75, zoom magnification, illumination method, dimmer, optical path switching, and setting of the TV camera 76 by communication with the observation device 69 and TV camera 76, and stores the conditions for each type of the sample selected from the sample type list 210 in the step S10.

Subsequently, the observer similarly repeats the registration of the teaching image by the number of portions on the sample which need to be observed (step S24).

It is to be noted that as to the teaching image, a file read button 185 existing in the operation screen 170 displayed on the monitor is selected, and the teaching image stored in the recording medium 10 of the personal computer main body 82, or a recording medium of another personal computer via communication means such as a network may be read and registered. In this case, the procedure of the steps S10 to S24 is not necessary.

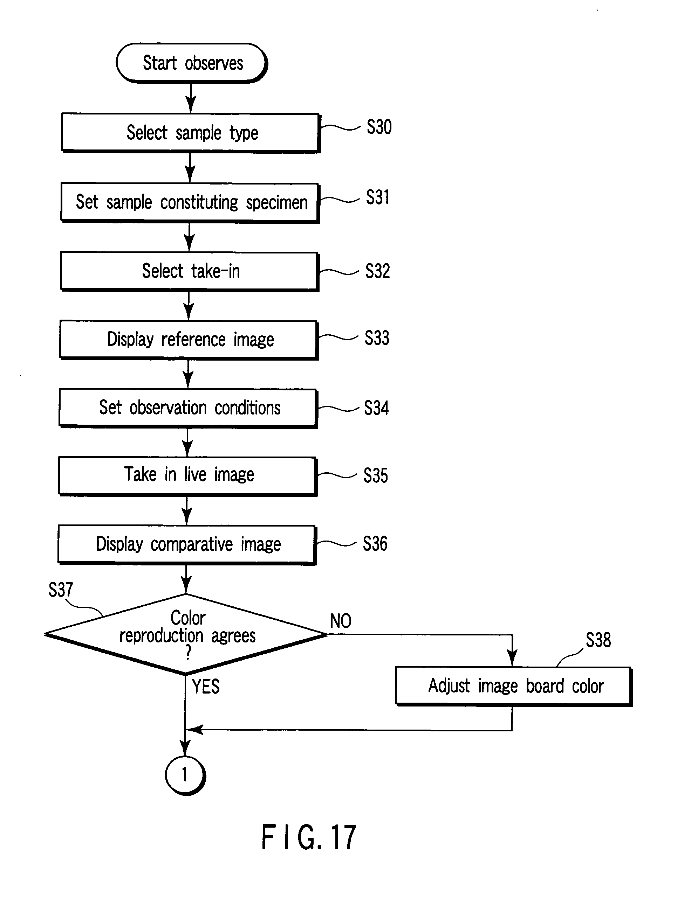

Next, the observer requires a sample image for comparison on the same conditions as those of the teaching-registered reference image. As shown in FIG. 17, the observer selects the type of the sample which is the specimen, for example, the identification card from the sample type list 210 on the operation screen 170 displayed on the monitor (step S30).

Next, the observer sets the comparison sample for producing the comparative image on the macro•micro electromotive stage 75 (step S31). Moreover, the observer selects a take-in button 229 on the operation screen 170 displayed on the monitor (step S32).

The personal computer main body 82 reads photographing conditions at a registration time of the teaching image registered for each type of the sample selected from the sample type list 210, and displays the teaching image as the reference image in the still image display region 180 (step S33). The personal computer main body 82 automatically controls the observation device 69 with respect to the position of the macro•micro electromotive stage 75 by the read photographing condition file, zoom magnification, illumination method, dimmer, optical path switching, setting of the TV camera 76 and the like based on various conditions via the macro•micro communication cable 98, and matches the conditions with observation conditions at the time of acquisition of the reference image (teaching image) (step S34). Moreover, the moving image of the sample on the macro•micro electromotive stage 75 photographed by the TV camera 76 is taken (step S35), and displayed as the comparative image in a moving image display region 190 (step S36).

Additionally, even when the image is photographed on the same photographing conditions, a difference of hue of the image is generated by deterioration of a lamp of an illumination device or a machine difference by the lens in the observation device 69. Therefore, the personal computer main body 82 adjusts color of an image input board in such a manner that the reference image agrees with the comparative image in color reproduction. For example, the color adjustment of the image input board is performed in such a manner that characteristic points of the reference image and luminance information of red•green•blue which is background color information agree with those of the comparative image (steps S37, S38). Accordingly, the photographing conditions of the reference image agree with those of the comparative image, an image which is easily compared can be photographed, and an operation of comparing the images is performed as described below.

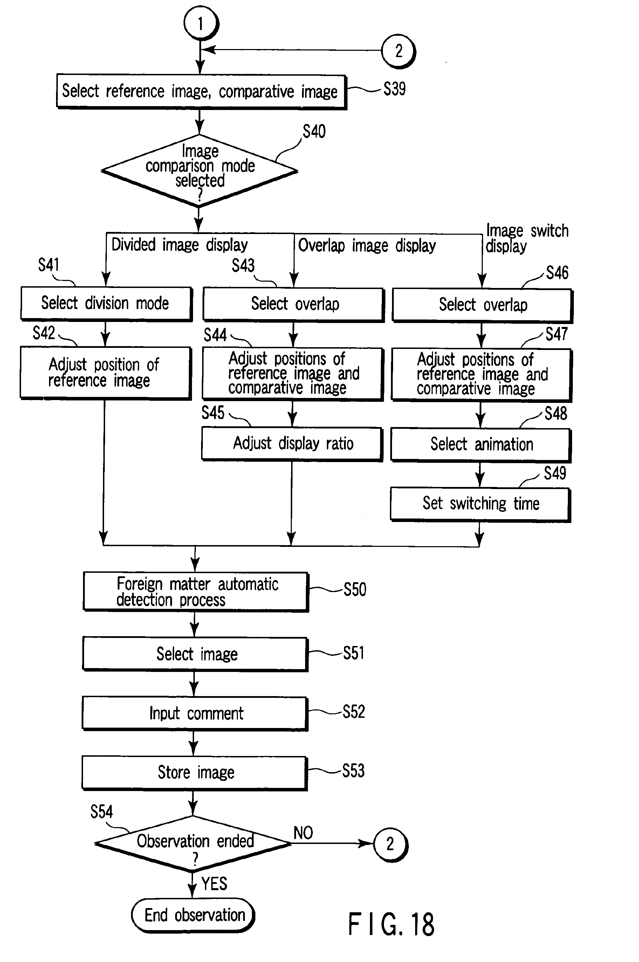

In this case, as shown in FIG. 18, the observer selects the comparative image and the reference image from tabs of the still image display region 180 and the moving image display region 190 (step S39), and subsequently selects an image comparison mode suitable for a region of the sample to be compared (step S40).

In this case, in divided image display which is a first image comparison mode, the observation image display region 200 is divided into two upper/lower or right/left regions, the reference image is displayed in one divided region, and the comparative image is displayed in the other divided region. A method of displaying division mode display is selected in the selection of the divided image display (step S41). This method of displaying the division mode display include left: reference image•right: comparative image, left: comparative image•right: reference image, upper: reference image•lower: comparative image, upper: comparative image•lower: reference image, and they can be selected by buttons 205. A ruled line of a boundary line which divides the region can be moved by a ruled line moving button 224.

The observer selects the display method of the division mode display suitable for the region of the sample to be compared. In this case, a vertical scroll bar 201 and a transverse scroll bar 202 are disposed in the reference image displayed in one divided region of the observation image display region 200. The observer moves the scroll bar to thereby adjust the display position of the reference image (step S42). Here, the personal computer main body 82 automatically moves the macro•micro electromotive stage 75 in accordance with the movement amount of the scroll bar in such a manner that an image display position of the reference image is the same as that of the comparative image. The comparative image displayed in one divided region of the observation image display region 200 is displayed in the moving image. When the position is to be finely adjusted as required, the observer confirms the image while moving the macro•micro electromotive stage 75 to thereby adjust the display position of the comparative image.

Moreover, in overlap display which is a second image comparison mode, as described above in detail, an image obtained by adding up an m/n times image and (n-m)/n times image in terms of optional integers n, m (additionally, n ≥ m) as to a ratio of luminance of the reference image and comparative image is displayed in the observation image display region 200. Accordingly, an image through which the reference image and comparative image are visible can be observed. It is to be noted that when the integers n, m are changed to thereby gradually change the ratio of the luminance of the reference image and comparative image, the image on one side can be emphasized and displayed.

In this case, the observer selects an overlap button 206 (step S43), adjusts the positions of the reference image and comparative image (step S44), and accordingly confirms the overlapped image while moving the macro•micro electromotive stage 75 to thereby match subtly displaced reference image and comparative image. Moreover, the observer confirms the overlapped image, and confirms portions which do not agree. It is to be noted that when the observer wants to emphasize either image by adjustment of a display ratio (step S45), the observer changes a display ratio adjustment bar 207, so that the display ratio of the image can be emphasized and displayed.

Furthermore, in image switching display (animation) which is a third image comparison mode, two images including the reference image and comparative image are alternately repeatedly switched/displayed in the observation image display region 200 at a predetermined time interval. The observer selects the overlap button 206 beforehand (step S46), adjusts the position of the reference image and comparative image (step S47), and accordingly matches subtle position displacements of the reference image and comparative image. Next, the observer selects an image switching display (animation) button 208 (step S48), and confirms the switched images while confirming portions which do not agree. That is, when alternately switching the images, the observer recognizes different portions by an afterimage effect of the image. In this case, the observer sets a switching time (step S49), operates a setting time button 209 to set a switching time at which comparison is facilitated, and observes the image.

It is to be noted that to change the display method of the reference image, the still image display region 180 is provided with an upper/lower button 181, a right/left button 182, and a negative button 183. By the upper/lower button 181 and the right/left button 182, for example, in a case where states of back/front of the sample are compared, the reference image can be vertically and horizontally reversed in such a manner as to match a direction of an image photographed from a back side with that of an image on a front side. By the negative button 183, the image on one side is positive/negative reversed depending on the sample so that the comparison of the images is easily recognized.

When the image comparison ends, a foreign matter automatic detection button 226 is selected. Then, by a foreign matter automatic detection process (step S50), binarized images of the reference image and comparative image are compared by the personal computer main body 82, different portions are colored, or marks or the like are displayed, and accordingly observer's image comparison is supported. Moreover, the observer visually observes the images referring to the foreign matter automatic detection process, and compared the images (step S51).

Next, when a comment button 225 is selected, comments can be input into the reference image, comparative image, and observation image by the image comparison mode by a drawing function (step S52), and supplementary description is written/added. The observer displays an image that needs to be stored in the observation image display region 200, and selects an image storage button 228, so that the image is stored in a storage medium to be stored (step S53). It is to be noted that at this time, the personal computer main body 82 also stores observation conditions of the stored image.

Next, the observer further changes the observation portion of the sample, and judges whether or not to continue detailed comparison/observation (step S54). Here, to continue the comparison/observation, the process returns to the step S32 to repeat the above-described operation. When the comparison/observation is not continued, the observation is ended.

Therefore, in this case, for example, the teaching image (reference image) of the portion of a sample such as an identification card, requiring the observation is registered beforehand together with various conditions such as a position (position where a digital is photographed) of the macro•micro electromotive stage 75, zoom magnification, illumination method, dimmer, optical path switching, and setting of the TV camera 76. During the observation of the sample to be compared, these observation conditions are automatically reproduced to photograph the comparative sample, and the photographed comparative image is compared with the reference image. Accordingly, the image of the sample to be compared with the teaching image (reference image) can be observed on the same observation conditions as those of the teaching image. Moreover, since characteristics of the teaching image can be easily compared/observed with those of the sample being observed on the same conditions, comparison precision can be rapidly enhanced, and a printed matter, identification card or the like subjected to special printing or processing can be easily discerned with high precision.

Moreover, the observation conditions at a time when the teaching image (reference image) is stored are stored together with the image data. For example, when the conditions are stored in the storage medium for common use beforehand, during the comparison of the image with the sample to be compared, the same observation conditions can be constantly automatically set in any system, and efficiency of an image comparison operation can be largely enhanced.

It is to be noted that when even one forged portion can be confirmed in the process of the image comparison, the sample can be judged to be entirely forged. Therefore, it is preferable to compare the image from a most suspicious portion in shortening a time of comparison/judgment. Then, as to a display order of tabs of photographed images, the comparative image and reference image are binarized, and arranged from a larger ratio of a disagreeing area, or arranged in order from a portion having a large number of previously confirmed forgeries.

Moreover, the microscope image comparison apparatus used in a standing-alone state has been described above, but a network system is constructed to store information such as description of forged portions of a digital image and document required for the image server via the network, and photographing conditions. Then, every time the image or the information of a forged matter is newly found in a different portion, it is stored in the image server, and the image is constantly updated to a latest reference image. Accordingly, the image server is searched for related information from the personal computer main body of the microscope comparison apparatus via the network, so that the latest reference image is constantly obtainable. If there is information on forged matters occurring many times at present, the display order of the display tabs of the reference images is updated and stored, the tabs are rearranged in such a manner as to be confirmed from the beginning, and the forged document can be efficiently confirmed. In this case, since confidential information such as data of a forged portion is communicated on the network, a process is performed to manage users and encipher the data, and a process to prevent the information from being leaked to the outside is required.

According to the third embodiment, there can be provided an image comparison apparatus capable of automatically matching and photographing the portion of the comparative image to be compared on the same conditions as those of the reference image and performing high-precision image comparison, an image comparison method, and a program for allowing a computer to execute the image comparison.

Industrial Applicability

There can be provided an image comparison apparatus capable of simply positioning a reference image and a comparative image, or automatically matching and photographing a portion of the comparative image to be compared on the same conditions as those of the reference image, and performing high-precision image comparison, an image comparison method, and a program for allowing a computer to execute the image comparison.

**Claims**

1. An image comparison apparatus comprising:

   observation image take-in means for taking in one of a macro observation image and a micro observation image of a sample;
   imaging means for photographing the observation image taken in by the observation image take-in means;
   recording means for recording a reference image prepared beforehand;
   display means for displaying the observation image photographed by the imaging means as a comparative image; and
   control means for correcting the reference image in such a manner that a position and a magnification of the reference image recorded in the recording means are the same as those of the comparative image displayed in the display means, and displaying the reference image on the display means in such a manner as to be comparable with the comparative image.

2. The image comparison apparatus according to claim 1, wherein the control means corrects the reference image from two characteristic positions indicated on the comparative image and two positions indicated on the reference image, corresponding to the two positions on the comparative image, in such a manner as to match one position of the reference image with that of the comparative image and match a distance and a tilt of a straight line connecting two positions of the reference image with those of a straight line connecting two positions of the comparative image.

3. An image comparison apparatus comprising:

observation image take-in means for taking in one of a macro observation image and a micro observation image of a sample;
imaging means for photographing the observation image taken in by the observation image take-in means;
recording means for recording a reference image prepared beforehand;
display means for displaying the reference image recorded in the recording means; and
control means for correcting the comparative image in such a manner that a position and a magnification of the observation image photographed by the imaging means are the same as those of the reference image displayed in the display means, and displaying the comparative image on the display means in such a manner as to be comparable with the reference image.

4. The image comparison apparatus according to claim 3, wherein the control means corrects the comparative image from two characteristic positions indicated on the reference image and two positions indicated on the comparative image, corresponding to the two positions on the reference image, in such a manner as to match a distance and a tilt of a straight line connecting two positions of the comparative image with those of a straight line connecting two positions of the reference image and match one position of the comparative image with that of the reference image.

5. An image comparison apparatus comprising:

observation image take-in means for taking in one of a macro observation image and a micro observation image of a sample;
imaging means for photographing the observation image taken in by the observation image take-in means;
recording means for recording an observation image photographed by the imaging means and observation conditions by the observation image take-in means and the imaging means;
display means for displaying the observation image recorded in the recording means as a reference image; and

control means for reproducing states of the observation image take-in means and the imaging means based on the observation conditions of the observation image recorded in the recording means, and displaying the observation image photographed by the imaging means as a comparative image in such a manner as to be comparable with the reference image.

6. An image comparison apparatus comprising:

observation image take-in means for taking in a macro observation image of a sample;
imaging means for photographing the observation image taken in by the observation image take-in means;
recording means for recording the observation image photographed by the imaging means and observation conditions by the observation image take-in means and the imaging means;
display means for displaying the observation image recorded in the recording means; and
control means for reproducing states of the observation image take-in means and the imaging means based on the observation conditions of the observation image recorded in the recording means, and displaying the observation image photographed by the imaging means as a comparative image in such a manner as to be comparable with the reference image.

7. The image comparison apparatus according to claim 5 or 6, wherein the observation conditions recorded in the recording means comprise at least one of a photographed position of the observation image photographed by the imaging means, a magnification, and an illumination method.

8. An image comparison method comprising:

taking in one of a macro observation image and a micro observation image of a sample, and photographing the taken-in observation image; and
displaying the photographed observation image on display means as a comparative image, correcting the reference image in such a manner that a position and a magnification of the reference image prepared beforehand are the same as those of the comparative image displayed on the display means, and displaying the reference image on the display means in such a manner as to be comparable with the comparative image.

9. The method according to claim 8, wherein the displaying the photographed observation image includes correcting the reference image from two characteristic positions indicated on the comparative image and two positions indicated on the reference image, corresponding to the two positions on the comparative image, in such a manner as to match one position of the reference image with that of the comparative image and match a distance and a tilt of a straight line connecting two positions of the reference image with those of a straight line connecting two positions of the comparative image.

10. An image comparison method comprising:

taking in one of a macro observation image and a micro observation image of a sample, and photographing the taken-in observation image; and

displaying the reference image prepared beforehand, correcting the comparative image in such a manner that a position and a magnification of the photographed observation image are the same as those of the reference image displayed on the display means, and displaying the comparative image on the display means in such a manner as to be comparable with the reference image.

11. The method according to claim 10, wherein displaying the reference image includes correcting the comparative image from two characteristic positions indicated on the reference image and two positions indicated on the comparative image, corresponding to the two positions on the reference image, in such a manner as to match a distance and a tilt of a straight line connecting two positions of the comparative image with those of a straight line connecting two positions of the reference image and match one position of the comparative image with that of the reference image.

12. An image comparison method comprising:

taking in one of a macro observation image and a micro observation image of a sample, and photographing the taken-in observation image; recording the photographed observation image and observation condition of the observation image; and

displaying the recorded observation image on display means as a reference image, reproducing states of the taking-in and photographing the observation image based on the observation condition of the recorded observation image, and displaying the photographed observation image with the reproduced condition on the display means in such a manner as to be comparable with the reference image.

13. An image comparison method comprising:

taking in a macro observation image of a sample, and photographing the taken-in observation image;

recording the photographed observation image and observation condition of the observation image; and

displaying the recorded observation image on display means as a reference image, reproducing states of the taking-in and photographing the observation image based on the observation condition of the recorded observation image, and displaying the photographed observation image with the reproduced condition on the display means in such a manner as to be comparable with the reference image.

14. The method according to claim 12 or 13, wherein the recorded observation conditions comprise at least one of a photographed position of the observation image photographed by the imaging means, a magnification, and an illumination method.

15. A computer-readable program for executing an image comparison on a computer, the program comprising:

take-in processing program code for taking in one of a macro observation image and a micro observation image of a sample, and photographing the taken-in observation image; and display processing program code for displaying the photographed observation image on display means as a comparative image, correcting the reference image in such a manner that a position and a magnification of the reference image prepared beforehand are the same as those of the comparative image displayed on the display means, and displaying the reference image on the display means in such a manner as to be comparable with the comparative image.

16. The program according to claim 15, wherein the display processing program code includes correction processing program code for correcting the reference image from two characteristic positions indicated on the comparative image and two positions indicated on the reference image, corresponding to the two positions on the comparative image, in such a manner as to match one position of the reference image with that of the comparative image and match a distance and a tilt of a straight line connecting two positions of the reference image with those of a straight line connecting two positions of the comparative image.

17. A computer-readable program for executing an image comparison on a computer, the program comprising:

take-in processing program code for taking in one of a macro observation image and a micro observation image of a sample, and photographing the taken-in observation image; and display processing program code for displaying the reference image prepared beforehand, correcting the comparative image in such a manner that a position and a magnification of the photographed observation image are the same as those of the reference image displayed on the display means, and displaying the comparative image on the display means in such a manner as to be comparable with the reference image.

18. The program according to claim 17, wherein displaying the reference image includes correcting the comparative image from two characteristic positions indicated on the reference image and two positions indicated on the comparative image, corresponding to the two positions on the reference image, in such a manner as to match a distance and a tilt of a straight line connecting two positions of the comparative image with those of a straight line connecting two positions of the reference image and match one position of the comparative image with that of the reference image.

19. A computer-readable program for executing an image comparison on a computer, the program comprising:

take-in processing program code for taking in one of a macro observation image and a micro observation image of a sample taken-in by observation image take-in means, and photographing the taken-in observation image by imaging means; record processing program code for recording the observation image photographed by the imaging means and observation condition by the observation image take-in means and the imaging means in recoding means; display processing program code for displaying the observation image recorded in the recording means as a reference image; and display processing program code for reproducing states of the taking-in and photographing the observation image based on the observation condition of the recorded observation image, and displaying the photographed observation image with the reproduced condition on the display means in such a manner as to be comparable with the reference image.

20. A computer-readable program for executing an image comparison on a computer, comprising:

take-in processing program code for taking in a micro observation image of a sample by observation image take-in means, and photographing the taken-in observation image with imaging means; storage processing program code for storing the observation image photographed by the imaging means and an observation condition of by the observation image take-in means and the imaging means in recording means; display processing program code for displaying the observation image recorded in the recording means on the display means as a reference image; and display processing program code for reproducing states of the taking-in and photographing the observation image based on the observation condition of the recorded observation image, and displaying the photographed observation image with the reproduced condition on the display means in such a manner as to be comparable with the reference image.

21. The program according to claim 19 or claim 20, wherein the recorded observation conditions comprise at least one of a photographed position of the observation image photographed by the imaging means, a magnification, and an illumination method.

**Amended claims under Art. 19.1 PCT**

**1.** An image comparison apparatus comprising:

observation image take-in means for taking in one of a macro observation image and a micro observation image of a sample; imaging means for photographing the observation image taken in by the observation image take-in means; recording means for recording a reference image prepared beforehand; display means for displaying the reference image, and a comparative image which is the observation image photographed by the imaging means to be compared with the reference image; and control means for correcting the reference image in such a manner that a position and a size of the reference image recorded in the recording means are the same as those of the comparative image displayed in the display means, and displaying the reference image on the display means in such a manner as to be comparable with the comparative image.

**2.** The image comparison apparatus according to claim 1, wherein the control means corrects the reference image from two characteristic positions indicated on the comparative image and two positions indicated on the reference image, corresponding to the two positions on the comparative image, in such a manner as to match one position of the reference image with that of the comparative image and match a distance and a tilt of a straight line connecting two positions of the reference image with those of a straight line connecting two positions of the comparative image.

**3.** (Amended) An image comparison apparatus comprising:

observation image take-in means for taking in one of a macro observation image and a micro observation image of a sample;
imaging means for photographing the observation image taken in by the observation image take-in means;
recording means for recording a reference image prepared beforehand;
display means for displaying the reference image recorded in the recording means; and
control means for correcting the comparative image in such a manner that a position and a size of the observation image photographed by the imaging means are the same as those of the reference image displayed in the display means, and displaying the comparative image on the display means in such a manner as to be comparable with the reference image.

**4.** The image comparison apparatus according to claim 3, wherein the control means corrects the comparative image from two characteristic positions indicated on the reference image and two positions indicated on the comparative image, corresponding to the two positions on the reference image, in such a manner as to match a distance and a tilt of a straight line connecting two positions of the comparative image with those of a straight line connecting two positions of the reference image and match one position of the comparative image with that of the reference image.

**5.** (Amended) An image comparison apparatus comprising:

observation image take-in means for taking in one of a macro observation image and a micro observation image of a sample;
imaging means for photographing the observation image taken in by the observation image take-in means;
recording means for recording an observation image photographed by the imaging means and observation conditions by the observation image take-in means and the imaging means;
display means for displaying the observation image recorded in the recording means as a reference image; and
control means for reproducing the observation image in such a manner that states of the observation image take-in means and the imaging means are the same based on the observation conditions of the observation image recorded in the recording means, and displaying the observation image photographed by the imaging means as a comparative image in such a manner as to be comparable with the reference image.

**6.** (Amended) An image comparison apparatus comprising:

observation image take-in means for taking in a macro observation image of a sample;
imaging means for photographing the observation image taken in by the observation image take-in means;
recording means for recording the observation image photographed by the imaging means and observation conditions by the observation image take-in means and the imaging means;
display means for displaying the observation image recorded in the recording means; and
control means for reproducing the observation image in such a manner that states of the observation image take-in means and the imaging means are the same based on the observation conditions of the observation image recorded in the recording means, and displaying the observation image photographed by the imaging means as a comparative image in such a manner as to be comparable with the reference image.

**7.** The image comparison apparatus according to claim 5 or 6, wherein the observation conditions recorded in the recording means comprise at least one of a photographed position of the observation image photographed by the imaging means, a magnification, and an illumination method.

**8.** (Amended) An image comparison method comprising:

taking in one of a macro observation image and a micro observation image of a sample, and photographing the taken-in observation image; and
displaying the photographed observation image on display means as a comparative image, correcting the reference image in such a manner that a position and a size of the reference image prepared beforehand are the same as those of the comparative image displayed on the display means, and displaying the reference image on the display means in such a manner as to be comparable with the comparative image.

**9.** The method according to claim 8, wherein the displaying the photographed observation image includes correcting the reference image from two characteristic positions indicated on the comparative image and two positions indicated on the reference image, corresponding to the two positions on the comparative image, in such a manner as to match one position of the reference image with that of the comparative image and match a distance and a tilt of a straight line connecting two positions of the reference image with those of a straight line connecting two positions of the comparative image.

**10.** (Amended) An image comparison method comprising:

taking in one of a macro observation image and a micro observation image of a sample, and photographing the taken-in observation image; and

displaying the reference image prepared beforehand, correcting the comparative image in such a manner that a position and a size of the photographed observation image are the same as those of the reference image displayed on the display means, and displaying the comparative image on the display means in such a manner as to be comparable with the reference image.

**11.** The method according to claim 10, wherein displaying the reference image includes correcting the comparative image from two characteristic positions indicated on the reference image and two positions indicated on the comparative image, corresponding to the two positions on the reference image, in such a manner as to match a distance and a tilt of a straight line connecting two positions of the comparative image with those of a straight line connecting two positions of the reference image and match one position of the comparative image with that of the reference image.

**12.** (Amended) An image comparison method comprising:

taking in one of a macro observation image and a micro observation image of a sample, and photographing the taken-in observation image;

recording the photographed observation image and observation condition of the observation image; and

displaying the recorded observation image on display means as a reference image, reproducing the observation image in such a manner that states of the observation image take-in means and the imaging means are the same based on the observation condition of the recorded observation image, and displaying the photographed observation image with the reproduced condition on the display means in such a manner as to be comparable with the reference image.

**13.** (Amended) An image comparison method comprising:

taking in a macro observation image of a sample, and photographing the taken-in observation image;

recording the photographed observation image and observation condition of the observation image; and

displaying the recorded observation image on display means as a reference image, reproducing the observation image in such a manner that states of the observation image take-in means and the imaging means are the same based on the observation condition of the recorded observation image, and displaying the photographed observation image with the reproduced condition on the display means in such a manner as to be comparable with the reference image.

**14.** The method according to claim 12 or 13, wherein the recorded observation conditions comprise at least one of a photographed position of the observation image photographed by the imaging means, a magnification, and an illumination method.

**15.** (Amended) A computer-readable program for executing an image comparison on a computer, the program comprising:

take-in processing program code for taking in one of a macro observation image and a micro observation image of a sample, and photographing the taken-in observation image; and

display processing program code for displaying the photographed observation image on display means as a comparative image, correcting the reference image in such a manner that a position and a size of the reference image prepared beforehand are the same as those of the comparative image displayed on the display means, and displaying the reference image on the display means in such a manner as to be comparable with the comparative image.

**16.** The program according to claim 15, wherein the display processing program code includes correction processing program code for correcting the reference image from two characteristic positions indicated on the comparative image and two positions indicated on the reference image, corresponding to the two positions on the comparative image, in such a manner as to match one position of the reference image with that of the comparative image and match a distance and a tilt of a straight line connecting two positions of the reference image with those of a straight line connecting two positions of the comparative image.

**17.** (Amended) A computer-readable program for executing an image comparison on a computer, the program comprising:

take-in processing program code for taking in one of a macro observation image and a micro observation image of a sample, and photographing the taken-in observation image; and display processing program code for displaying the reference image prepared beforehand, correcting the comparative image in such a manner that a position and a size of the photographed observation image are the same as those of the reference image displayed on the display means, and displaying the comparative image on the display means in such a manner as to be comparable with the reference image.

**18.** The program according to claim 17, wherein displaying the reference image includes correcting the comparative image from two characteristic positions indicated on the reference image and two positions indicated on the comparative image, corresponding to the two positions on the reference image, in such a manner as to match a distance and a tilt of a straight line connecting two positions of the comparative image with those of a straight line connecting two positions of the reference image and match one position of the comparative image with that of the reference image.

**19.** (Amended) A computer-readable program for executing an image comparison on a computer, the program comprising:

take-in processing program code for taking in one of a macro observation image and a micro observation image of a sample taken-in by observation image take-in means, and photographing the taken-in observation image by imaging means;

record processing program code for recording the observation image photographed by the imaging means and observation condition by the observation image take-in means and the imaging means in recoding means; display processing program code for displaying the observation image recorded in the recording means as a reference image; and display processing program code for reproducing states of the taking-in and photographing the observation image based on the observation condition of the recorded observation image, and displaying the photographed observation image with the reproduced condition on the display means in such a manner as to be comparable with the reference image.

**20.** (Amended) A computer-readable program for executing an image comparison on a computer, comprising:

take-in processing program code for taking in a micro observation image of a sample by observation image take-in means, and photographing the taken-in observation image with imaging means; storage processing program code for storing the observation image photographed by the imaging means and an observation condition of by the observation image take-in means and the imaging means in recording means; display processing program code for displaying the observation image recorded in the recording means on the display means as a reference image; and display processing program code for reproducing states of the taking-in and photographing the observation image based on the observation condition of the recorded observation image, and displaying the photographed observation image with the reproduced condition on the display means in such a manner as to be comparable with the reference image.

**21.** The program according to claim 19 or claim 20, wherein the recorded observation conditions comprise at least one of a photographed position of the observation image photographed by the imaging means, a magnification, and an illumination method.

13

Monitor

7          8          9       5

Video card        RAM        CPU

12

Image input board

Recording medium (Program)

Interface

11

6        10a    10

Keyboard        14        15

TV camera        4

Micro observation unit        Macro observation unit

2        3

1

FIG. 1

FIG. 2

EP 1 549 072 A1

FIG.3

EP 1 549 072 A1

FIG. 4A

42L    42R

FIG. 4B

43L    43R

FIG. 4C

42L    43R

FIG. 4D

43R    42L

FIG. 4E

43L    42R

FIG. 4F

42R    43L

42U

FIG. 5A

42D

43U

FIG. 5B

43D

42U

FIG. 5C

43D

43D

FIG. 5D

42U

43U

FIG. 5E

42D

42D

FIG. 5F

43U

42A

F I G. 6A

46a

F I G. 6B

46b

F I G. 6C

43B

F I G. 6D

42E

43F

F I G. 8

Execute overlapping

Read overlap ratio of still image and live image ~ 701

Add up and synthesize reference image and comparative image at overlap ratio to display images in observation image display region ~ 702

703
Ratio changed by slider ? — YES

NO

704
Set ratio designated by slider

705
NO — Overlapping end ?

YES

End overlapping

FIG.7

FIG. 9A

FIG. 9B

FIG. 9C

FIG. 9D

FIG. 9E

Start

Click first position on live image ~1001

Click first position of still image corresponding to first position of live image ~1002

1003
First positions agree ? — YES

NO

Move still image to match first positions ~1004

Click second poisitions ~1005

Click second position of still image corresponding to second position of live image ~1006

Enlarge or reduce still image by difference of magnification between live image and still image ~1007

Rotate still image by tilt angle difference between live image and still image ~1008

End

F I G. 10

F I G. 11

F I G. 12A

F I G. 12B

F I G. 12C

F I G. 12D

F I G. 12E

```
                      ┌─────────────┐
                      │    Start    │
                      └──────┬──────┘
                             │
                             ▼
         ┌──────────────────────────────────────┐
         │ Click first and second positions on   │ ～1101
         │ still image                            │
         └──────────────────┬────────────────────┘
                             │
                             ▼
         ┌──────────────────────────────────────┐
         │ Click first and second positions of   │
         │ live image corresponding to first      │ ～1102
         │ and second positions of still image    │
         └──────────────────┬────────────────────┘
                             │
                             ▼
                         1103
                    ◇ Magnifications equal ?            YES ──┐
                             │                                │
                             │ NO                             │
                             ▼                                │
         ┌──────────────────────────────────────┐            │
         │ Operate electromotive zoom to match   │ ～1104      │
         │ magnifications                         │            │
         └──────────────────┬────────────────────┘◄───────────┘
                             │
                             ▼
         ┌──────────────────────────────────────┐
         │ Rotate electromotive stage by tilt     │ ～1105
         │ angles of still image and live image   │
         └──────────────────┬────────────────────┘
                             │
                             ▼
         ┌──────────────────────────────────────┐
         │ Click first position on live image     │ ～1106
         └──────────────────┬────────────────────┘
                             │
                             ▼
                         1107
                    ◇ First positions agree ?          YES ──┐
                             │                                │
                             │ NO                             │
                             ▼                                │
         ┌──────────────────────────────────────┐            │
         │ Move electromotive stage X·Y direction │ ～1108      │
         │ to match first positions               │            │
         └──────────────────┬────────────────────┘◄───────────┘
                             │
                             ▼
                      ┌─────────────┐
                      │     End     │
                      └─────────────┘
```

F I G. 13

EP 1 549 072 A1

☐ Microscope image comparison software                                    ☐ ▨ ⊠

File (F)   Still image (S)   Live image (L)   Observation image (O)   Tool(T)

┌─ Reference image (Still) ─────────┐        ┌─ Observation region ──────────── Sample type ─────────┐
Vertical Horizontal Negative Read  Image         Live  Still                                              210
                                   registration  image image  ┌─Divided display─┐ Overlap    Animation    208
                                                                                                          209
┌─────┐ ┌─────┐ ┌─────┐ ┌─────┐ ┌─────┐  ☐    ☐   ☐ ☐ ☐ ☐    ☐        ⬇     ☐   ☐◈    Optical path
                                                                                           switch
                                   Teaching  ┌───┐                                      ┌─ Micro ─┐  242
┌Image 1┐                                 ☐                                             │         │
                                                                                        └─ Macro ─┘  243
  183        185    186           203  204  205      206    207                                      200

                                                                                         Image
                                                                                         enlargement
                                                                                         magnification
                                                                                         ┌──┐◈       231

                                    201

                                                                                         ┌────────┐
                                                                                         │ Cancel │
                                                                                         └────────┘   232
┌Image 1┐
                                                                                         ┌────────┐
                                                                                         │  Set   │
                                    202                                                  └────────┘

                            Live image correction ─Ruled line─Comment─ Automatic Photo-   Store
                                                                       detection graphing image
                          Automatic contrast ☐                                  condition          ┌────────┐
                                                                                                    │Take-in │  229
                          Image integration ☐ ☐ ◈  ☐ ☐    ☐      ☐        ☐      ☐        └────────┘

                           221  222  223  224   225   226        228                     ┌────┐
                                                                                         │End │
FIG. 14                                                                                  └────┘

Start teaching

S10 — Select type of sample

2

S11 — Observation apparatus ?

S12 — Switch optical path to macro

S13 — Switch optical path to micro

S14 — Display live image

S15 — Set sample constituting specimen

S16 — Illumination method and brightness adjustment

S17 — Image enlarged ?

YES

NO

S18 — Designate magnification · enlarged position

S19 — Change magnification · move stage

S20 — Adjust magnification · focus

1

F I G. 15

①

S21

Contrast sufficient
?

NO

S22

Image integration process

YES

S23

Register teaching image

S24

Teaching end
?

YES

②

NO

End

F I G. 16

Start observes

Select sample type — S30

Set sample constituting specimen — S31

Select take-in — S32

Display reference image — S33

Set observation conditions — S34

Take in live image — S35

Display comparative image — S36

S37

Color reproduction agrees ?

NO

S38

YES

Adjust image board color

1

F I G. 17

①

②

Select reference image, comparative image — S39

Image comparison mode selected ? — S40

Divided image display | Overlap image display | Image switch display

S41 — Select division mode

S43 — Select overlap

S46 — Select overlap

S42 — Adjust position of reference image

S44 — Adjust positions of reference image and comparative image

S47 — Adjust positions of reference image and comparative image

S45 — Adjust display ratio

S48 — Select animation

S49 — Set switching time

Foreign matter automatic detection process — S50

Select image — S51

Input comment — S52

Store image — S53

S54 — Observation ended ? — NO → ②

YES

End observation

F I G. 18

**INTERNATIONAL SEARCH REPORT**

| | International application No. |
|---|---|
| | PCT/JP03/10531 |

A. CLASSIFICATION OF SUBJECT MATTER
    Int.Cl⁷ H04N7/18, H04N5/91

According to International Patent Classification (IPC) or to both national classification and IPC

B. FIELDS SEARCHED

Minimum documentation searched (classification system followed by classification symbols)
    Int.Cl⁷ H04N7/18, H04N5/91

Documentation searched other than minimum documentation to the extent that such documents are included in the fields searched

| | | | |
|---|---|---|---|
| Jitsuyo Shinan Koho | 1922-1996 | Toroku Jitsuyo Shinan Koho | 1994-2003 |
| Kokai Jitsuyo Shinan Koho | 1971-2003 | Jitsuyo Shinan Toroku Koho | 1996-2003 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 06-046361 U (Olympus Optical Co., Ltd.), 24 June, 1994 (24.06.94), | 1,3,8,10,15, 17 |
| A | Fig. 2 (Family: none) | 2,4,5-7,9, 11,12-14,16, 18,19-21 |
| Y | JP 06-006807 A (Olympus Optical Co., Ltd.), 14 January, 1994 (14.01.94), | 1,3,8,10,15, 17 |
| A | Fig. 1 (Family: none) | 2,4,5-7,9,11, 12-14,16,18, 19-21 |
| Y | JP 11-045334 A (Dainippon Screen Mfg. Co., Ltd.), 16 February, 1999 (16.02.99), | 1,3,8,10,15, 17 |
| A | Page 2, right column, lines 23 to 34 (Family: none) | 2,4,5-7,9, 11,12-14,16, 18,19-21 |

☒ Further documents are listed in the continuation of Box C.  ☐ See patent family annex.

| | |
|---|---|
| * Special categories of cited documents:<br>"A" document defining the general state of the art which is not considered to be of particular relevance<br>"E" earlier document but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 25 November, 2003 (25.11.03) | 16 December, 2003 (16.12.03) |

| Name and mailing address of the ISA/ | Authorized officer |
|---|---|
| Japanese Patent Office | |
| Facsimile No. | Telephone No. |

Form PCT/ISA/210 (second sheet) (July 1998)

**INTERNATIONAL SEARCH REPORT**

| International application No. |
|---|
| PCT/JP03/10531 |

C (Continuation).   DOCUMENTS CONSIDERED TO BE RELEVANT

| Category* | Citation of document, with indication, where appropriate, of the relevant passages | Relevant to claim No. |
|---|---|---|
| P,X | JP 2003-066339 A  (Olympus Optical Co., Ltd.), 05 March, 2003 (05.03.03), Page 5, right column, lines 10 to 23; Figs. 2, 3 & EP 1293927 A2 | 5-7,12-14, 19-21 |

Form PCT/ISA/210 (continuation of second sheet) (July 1998)

## INTERNATIONAL SEARCH REPORT

International application No.

PCT/JP03/10531

| Box I | Observations where certain claims were found unsearchable (Continuation of item 2 of first sheet) |

This international search report has not been established in respect of certain claims under Article 17(2)(a) for the following reasons:

1. ☐ Claims Nos.:

because they relate to subject matter not required to be searched by this Authority, namely:

2. ☐ Claims Nos.:

because they relate to parts of the international application that do not comply with the prescribed requirements to such an extent that no meaningful international search can be carried out, specifically:

3. ☐ Claims Nos.:

because they are dependent claims and are not drafted in accordance with the second and third sentences of Rule 6.4(a).

| Box II | Observations where unity of invention is lacking (Continuation of item 3 of first sheet) |

This International Searching Authority found multiple inventions in this international application, as follows:

Claims 1-4, 8-11, 15-18 relate to a device (method, program) for correcting a reference image or a comparison image.

Claims 5-7, 12-14, 19-21 relate to a device (method, program) for displaying a reference image and a comparison image according to the observation condition.

1. ☐ As all required additional search fees were timely paid by the applicant, this international search report covers all searchable claims.

2. ☒ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest** ☐ The additional search fees were accompanied by the applicant's protest.

☐ No protest accompanied the payment of additional search fees.

Form PCT/ISA/210 (continuation of first sheet (1)) (July 1998)